(19) **Europäisches Patentamt**
European Patent Office
Office européen des brevets

(11) **EP 3 577 601 B1**

(12) **EUROPÄISCHE PATENTSCHRIFT**

(45) Veröffentlichungstag und Bekanntmachung des Hinweises auf die Patenterteilung:
**07.04.2021   Patentblatt 2021/14**

(51) Int Cl.:
**G06K 19/067** (2006.01)     **G06K 7/08** (2006.01)
**G06F 3/039** (2013.01)

(21) Anmeldenummer: **18711813.8**

(22) Anmeldetag: **31.01.2018**

(86) Internationale Anmeldenummer:
**PCT/EP2018/000044**

(87) Internationale Veröffentlichungsnummer:
**WO 2018/141478 (09.08.2018 Gazette 2018/32)**

(54) **VERFAHREN ZUR ERZEUGUNG EINES ZEITABHÄNGIGEN SIGNALS AUF EINEM KAPAZITIVEN FLÄCHENSENSOR UND EIN VERFAHREN ZUR IDENTIFIKATION EINES KARTENÄHNLICHEN OBJEKTS, SOWIE EIN KARTENÄHNLICHES OBJEKT UND DESSEN VERWENDUNG**

METHOD FOR PRODUCING A TIME-DEPENDANT SIGNAL ON A CAPACITIVE AREA SENSOR AND A METHOD FOR IDENTIFYING A CARD-LIKE OBJECT, AND A CARD-LIKE OBJECT AND USE THEREOF

PROCÉDÉ DE PRODUCTION D'UN SIGNAL DÉPENDANT DU TEMPS SUR UN CAPTEUR DE ZONE CAPACITIF ET PROCÉDÉ D'IDENTIFICATION D'UN OBJET DE CARTE, ET OBJET DE CARTE ET UTILISATION DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017   EP 17000167**
**21.08.2017   EP 17001423**

(43) Veröffentlichungstag der Anmeldung:
**11.12.2019   Patentblatt 2019/50**

(73) Patentinhaber: **Prismade Labs GmbH**
**09116 Chemnitz (DE)**

(72) Erfinder:
• **WEIGELT, Karin**
  **09116 Chemnitz (DE)**
• **THIELE, Jan**
  **09224 Chemnitz / Grüna (DE)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
**EP-A1- 2 431 923     EP-A1- 2 458 526**
**EP-A2- 0 422 482     US-A1- 2014 332 587**

**Beschreibung**

**Beschreibung**

Die Erfindung betrifft ein Verfahren zur Erzeugung eines zeitabhängigen Signals auf einem kapazitiven Flächensensor und ein Verfahren zur Identifikation eines kartenähnlichen Objekts, sowie ein kartenähnliches Objekt und dessen Verwendung.

Die Erfindung ist auf dem technischen Gebiet der Autoidentifikationstechnologien angesiedelt. Bekannte Technologien zur automatischen gerätebasierten Identifikation von Objekten sind zum Beispiel optische Codes oder RFID-Tags (Radiofrequenzidentifikation). Optische Codes sind in Form von klassischen Strichcodes (Barcodes) oder auch 2D-Barcodes bekannt. Der Nachteil von optischen Codes ist vor allem die einfache Kopierbarkeit, so dass entsprechende gekennzeichnete Objekte nicht optimal gegenüber Fälschungsversuchen geschützt sind.

RFID-Tags sind elektronische Schaltkreise, die mittels Funkwellen ausgelesen werden. Diese Tags sind wesentlich fälschungssicherer im Vergleich zu optischen Codes. Für viele Massenanwendungen sind RFID-Tags jedoch zu teuer, insbesondere weil häufig eine Anwendung in hohen Stückzahlen erforderlich ist. Als weitere alternative Autoidentifikationstechnologie wurden in den letzten Jahren kapazitive Datenträger entwickelt, die die Vorteile der geringen Kosten und der verbesserten Fälschungssicherheit kombinieren. Aus dem Stand der Technik sind kapazitive Datenträger in unterschiedlichen Ausprägungen bekannt, sowie Verfahren zu deren Herstellung und Verfahren und Systeme zur Identifikation der Datenträger.

In WO 2011/154524 A1 wird ein System mit kapazitivem Informationsträger zur Erfassung von Informationen offenbart. Die Erfindung beschreibt ein System, umfassend einen kapazitiven Informationsträger, bei dem auf einem elektrisch nicht-leitfähigen Substrat eine elektrisch leitfähige Schicht angeordnet ist und einen Flächensensor, wobei der Informationsträger mit dem Flächensensor in Kontakt gebracht vorliegt. Die elektrisch leitfähige Schicht umfasst eine Touch-Struktur, die einen Touch-Punkt, eine Koppelfläche und eine Leiterbahn umfasst. Eine solche Struktur kann mit einem mit dem Flächensensor verbundenen Datenverarbeitungssystem ausgewertet und softwaretechnisch verarbeitet werden. Die resultierenden Touch-Eingaben auf dem Flächensensor erzeugen ein statisches Bild von mehreren Touch-Punkten, welches vom Datenverarbeitungssystem ausgewertet werden kann.

In DE 10 2012 023 082 A1 ist die Interaktion eines flächigen, tragbaren Datenträgers mit einem Endgerät offenbart. Der tragbare Datenträger, der beispielsweise ein Wertdokument sein kann, umfasst eine elektrisch leitfähige Struktur, die auf zumindest einer Oberfläche und/oder im Inneren des Datenträgers vorgesehen ist, wobei einzelne Bereiche der leitfähigen Struktur elektrisch leitfähig oder kapazitiv miteinander verbunden sind. Das Endgerät weist eine berührungsempfindliche, kapazitive Fläche, insbesondere ein kapazitives Display, auf.

Die DE 10 2013 101 881 A1 beschreibt einen Mehrschichtkörper mit einem Träger und einer darauf angeordneten elektrisch leitfähigen Schicht, umfassend einen Informationsbereich und einen Hintergrundbereich, die voneinander galvanisch getrennt sind. In jedem Informationsbereich ist eine erste Zone mit elektrisch leitfähigem Material bereitgestellt, über deren Gesamtheit hinweg ihr elektrisch leitfähiges Material leitend verbunden ist. In jedem Hintergrundbereich ist eine Mehrzahl von zweiten Zonen mit elektrisch leitfähigem Material bereitgestellt, die galvanisch voneinander getrennt sind. Dieser Mehrschichtkörper kann mittels einer kapazitiv erfassenden Eingabevorrichtung ausgelesen werden.

Diese beiden Anmeldungen zeichnen sich dadurch aus, dass die elektrisch leitfähige Struktur, die den Informationsbereich darstellt, elektrisch leitfähig verbunden ist. Ausgewertet wird jeweils das statische Bild, welches die elektrisch leitfähige Struktur auf einem kapazitiven Endgerät erzeugt.

In US 20100045627 A1 ist ein Verfahren beschrieben, welches die Erzeugung eines Touch-Signals auf einem Berührungsbildschirm durch Form oder Muster eines Objektes sowie dessen Erkennung durch eine Software und das Auslösen einer zugeordneten Aktion beschreibt. Dabei erzeugt die Auflagefläche des gesamten Objekts ein Eingabesignal auf dem Berührungsbildschirm.

Bei den genannten Objekten und Vorrichtungen aus dem Stand der Technik handelt es sich um Objekte oder Vorrichtungen, die entweder vollständig oder teilweise aus elektrisch leitfähigem Material bestehen und ein bestimmtes Eingabemuster auf einem kapazitiven Berührungsbildschirm verursachen. Dieses Eingabemuster, beziehungsweise der sogenannte "Fußabdruck", wird hinsichtlich der relativen Position der Kontaktflächen ausgewertet und einem Datensatz oder einer Aktion zugeordnet. Es wird dabei immer ein statisches Eingabemuster, welches zu einem bestimmten Zeitpunkt vorliegt, ausgewertet. Da bei den genannten Systemen immer ein statisches Eingabemuster ausgewertet wird, kann dieses auch imitiert werden. Damit ist bei den Systemen, die aus dem Stand der Technik bekannt sind, keine Fälschungssicherheit für sicherheitsrelevante Anwendungen gegeben.

Nachteilig bei den Vorrichtungen aus dem Stand der Technik ist, dass die begrenzte Datendichte, das heißt die Anzahl unterschiedlicher Identifikatoren (IDs) pro Fläche, durch die Art der Codierung begrenzt ist, wobei es sich üblicherweise um eine geometrische Codierung handelt. Eine größere Anzahl unterschiedlicher IDs resultiert in einem großen Flächenbedarf, der bei vielen Anwendungen nicht gewährleistet werden kann. Darüber hinaus ist die Benutzerfreundlichkeit für einige der genannten Systeme aus dem Stand der Technik nicht optimal, da der Nutzer darauf achten muss, welcher Teil des Datenträgers auf dem Berührungsbildschirm aufliegen muss und darf und welcher nicht aufliegen darf.

Aufgabe der Erfindung ist es, ein Verfahren zur Erzeugung eines zeitabhängigen Signals auf einem kapazitiven Flächensensor und ein Verfahren zur Identifikation eines kartenähnlichen Objekts, sowie ein kartenähnliches Objekt bereitzustellen, die nicht die Nachteile und Mängel des Standes der Technik aufweisen und darüber hinaus besonders fälschungssicher sind, die Unterbringung von großen Datenmengen auf geringen Raum ermöglichen und besonders benutzerfreundlich ausgebildet sind.

## Beschreibung der Erfindung:

Erfindungsgemäß ist zur Lösung der Aufgabe ein kartenähnliches Objekt nach Anspruch 1, eine Verwendung nach Anspruch 8, ein System nach Anspruch 10 und ein Verfahren nach Anspruch 12 vorgesehen.

Ein kartenähnliches Objekt ist im Sinne der Erfindung bevorzugt ein dreidimensionales Erzeugnis, das in einer besonders bevorzugten Ausführungsform der Erfindung die Form einer Karte, beispielsweise eine Kreditkarte, aufweist. Der durchschnittliche Fachmann weiß, dass eine Karte vorzugsweise flach ausgestaltet ist, das heißt eine Höhe aufweist, die deutlich kleiner ist als eine Länge oder Breite des bevorzugten Objekts. Insbesondere kann ein kartenähnliches Objekt flächig ausgestaltet sein, das heißt eine große Grundfläche gegenüber einer geringen Höhe aufweisen, wobei es im Sinne der Erfindung insbesondere bevorzugt ist, wenn das kartenähnliche Objekt mit der Grundfläche auf einen Flächensensor aufgelegt wird, wodurch vorteilhafterweise eine große Wirkfläche zum Zusammenwirken von Objekt und Flächensensor geschaffen wird. Es ist in einer weiteren Ausführungsform bevorzugt, dass das kartenförmige Objekt eine Länge aufweist, die deutlich größer ist als die Breite des Objektes. Bei einer üblichen Kreditkarte beträgt eine Länge beispielsweise 86 mm und eine Breite 54 mm, was einem Verhältnis von etwa 1,6 entspricht. Eine konventionelle Kreditkarte stellt im Sinne der Erfindung ein Beispiel für ein kartenförmiges Objekt dar, bei dem eine Länge deutlich größer ist als eine Breite des Objekts. Beispielsweise können damit Objekte gemeint sein, bei denen ein Verhältnis von Länge zu Breite größer als 1,5 ist. Es kann im Sinne der Erfindung aber auch bevorzugt sein, dass das kartenförmige Objekt eine quadratische Grundfläche aufweist, die vorzugsweise von einem Verhältnis zwischen Länge und Breite des Objekts von 1 gekennzeichnet ist. In bestimmten Ausführungsformen ist es bevorzugt, dass es sich bei dem kartenförmigen Objekt um ein bahnförmiges Material handelt, welches zum Beispiel auf einer Rolle bereitgestellt werden kann. Es ist insbesondere bevorzugt, dass das kartenähnliche Objekt so ausgestaltet ist, dass es auf einen Flächensensor aufgelegt werden kann, ohne diesen zu beschädigen oder zu zerstören. Es ist bevorzugt, dass das kartenähnliche Objekt ein Material umfasst, das beispielsweise ausgewählt sein kann auf einer Gruppe umfassend Papier, Karton, Kunststoff, Textil, ohne darauf beschränkt zu sein.

Es ist im Sinne der Erfindung bevorzugt, dass ein zeitabhängiges Signal bevorzugt ein zeitlich veränderliches Signal darstellt, das heißt ein Signal, das sich im Laufe der Zeit von sich selbst oder durch eine Einwirkung von außen verändert. Im Kontext der vorliegenden Erfindung wird das zeitabhängige Signal durch die Anordnung der Einzelelemente auf dem kartenähnlichen Objekt festgelegt und durch eine Relativbewegung zwischen einem Eingabemittel und dem kartenähnlichen Objekt erzeugt. Es ist im Sinne der Erfindung bevorzugt, dass die elektrisch leitfähige Struktur mindestens zwei Einzelelemente umfasst. Es kann aber für einige Anwendungen der Erfindung bevorzugt sein, dass die elektrisch leitfähige Struktur eine größere Zahl von Einzelelementen umfasst. Für verschiedene Anwendungen kann es im Sinne der Erfindung auch bevorzugt sein, dass ein kartenähnliches Objekt mehr als eine elektrisch leitfähige Struktur umfasst. Diese können beispielsweise parallel zueinander oder um einen Winkel gegeneinander verdreht auf dem Objekt angeordnet vorliegen, wodurch sich komplexe Interaktionsmöglichkeiten zwischen den einzelnen elektrisch leitfähigen Strukturen ergeben können.

Es kann im Sinne der Erfindung bevorzugt sein, dass die Einzelelemente, die die elektrisch leitfähige Struktur bilden, zueinander ähnlich sind, das heißt beispielsweise aus Streifen mit unterschiedlicher Länge und/oder Breite bestehen, die nebeneinander angeordnet sein können und beispielsweise einen gleichen oder unterschiedlichen Abstand zueinander aufweisen. Solche Einzelelemente sind bevorzugt insofern ähnlich zueinander, dass alle Einzelelemente streifenförmig ausgebildet sind, auch wenn sie sich in ihrer Länge unterscheiden können. Es kann aber auch bevorzugt sein, dass die Einzelelemente einer elektrisch leitfähigen Struktur untereinander nicht ähnlich sind, also unterschiedliche Formen aufweisen.

In einer weiteren bevorzugten Ausgestaltung der Erfindung liegen die Einzelelemente der elektrisch leitfähigen Struktur galvanisch getrennt voneinander vor. Die bevorzugte räumliche und/oder galvanische Trennung der Einzelelemente der elektrisch leitfähigen Struktur voneinander kann beispielsweise dadurch erreicht werden, dass jeweils zwei Einzelelemente beabstandet voneinander vorliegen, wobei dieser Abstand zwischen den Einzelelementen innerhalb einer elektrisch leitfähigen Struktur gleich sein oder variieren kann. Es ist im Sinne der Erfindung insbesondere bevorzugt, dass die elektrisch leitfähige Struktur mindestens zwei voneinander galvanisch getrennte Einzelelemente umfasst, wobei die Einzelelemente in einer Ebene angeordnet vorliegen. Der Begriff "in einer Ebene" bedeutet im Sinne der Erfindung bevorzugt, dass die elektrisch leitfähige Struktur beispielsweise auf der Vorder- und/oder der Rückseite des bevorzugt flächig ausgestalteten kartenähnlichen Objekts angeordnet vorliegt.

Der Begriff "kapazitiver Flächensensor" bezeichnet im Sinne der Erfindung bevorzugt solche touchscreenaufweisende Vorrichtungen, die in der Lage sind, äußere Einwirkungen oder Beeinflussungen, beispielsweise Kontakte, der Touchscreenfläche wahrzunehmen und mittels angegliederter Logik auszuwerten. Solche Flächensensoren werden beispielsweise benutzt, um Maschinen einfacher zu bedienen. Um eine Eingabe an einem kapazitiven Bildschirm, der vorzugsweise auch als Berührungsbildschirm, Touchscreen oder Flächensensor bezeichnet wird, vorzunehmen, können neben den Fingern auch spezielle Eingabestifte oder ähnliche Vorrichtungen genutzt werden. Im Sinne der Erfindung werden Finger sowie spezielle Eingabestifte bevorzugt als Eingabemittel bezeichnet. Diese sind vorzugsweise in der Lage, eine kapazitive Kopplung zwischen Zeilen- und Spaltenelektroden innerhalb des Flächensensors zu ändern. Solche Eingabemittel, die im Sinne der Erfindung vorzugsweise dazu eingerichtet sind, durch eine Relativbewegung zwischen dem Eingabemittel und dem katenähnlichen Objekt ein zeitabhängiges Signal zu erzeugen, werden im Stand der Technik nicht beschrieben. Der kapazitive, bevorzugt berührungsempfindliche Bildschirm ist vorzugsweise dafür eingerichtet, die Position des Eingabemittels zu detektieren.

Üblicherweise werden Flächensensoren in einem elektrischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/oder kapazitive Eingabegeräte handeln kann, ohne darauf begrenzt zu sein. Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt.

Es kann im Sinne der Erfindung beispielsweise bevorzugt sein, multitouchfähige Flächensensoren zu verwenden. Solche Flächensensoren sind vorzugsweise dafür eingerichtet, mehrere Berührungen gleichzeitig zu erkennen, wodurch zum Beispiel Elemente, die auf einem Touchscreen angezeigt werden, gedreht oder skaliert werden können.

Es kann im Sinne der Erfindung beispielsweise auch bevorzugt sein, Flächensensoren zu verwenden, die nicht multitouchfähig sind. Insbesondere ältere Geräte, zum Beispiel Smartphones, können nur eine Berührung gleichzeitig erkennen. Aus dem Stand der Technik sind Informationsträger bekannt, die auf dem Flächensensor ein statisches Bild von mehreren Touch-Punkten erzeugen. Solche Informationsträger sind mit älteren Geräten, deren Flächensensor nicht multitouchfähig ist, inkompatibel. Es war vollkommen überraschend, dass das erfindungsgemäße Verfahren zur Erzeugung eines zeitabhängigen Signals auf einem kapazitiven Flächensensor mittels eines kartenähnlichen Objektes kompatibel zu diesen sogenannten singletouchfähigen Flächensensoren ist. Der Ausdruck, dass das vorgeschlagene Verfahren kompatibel zu diesen singletouchfähigen Flächensensoren ist, bedeutet im Sinne der Erfindung bevorzugt, dass solche Flächensensoren für die Ausführung des Verfahrens verwendet werden können beziehungsweise dass das vorgeschlagene Verfahren auf diesen Geräten "läuft".

Flächensensoren umfassen insbesondere mindestens einen aktiven Schaltkreis, der vorzugsweise als Touch-Controller bezeichnet wird, welcher mit einer Struktur von Elektroden verbunden sein kann. Es sind im Stand der Technik Flächensensoren bekannt, deren Elektroden Gruppen von Elektroden umfassen, die sich beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, das heißt insbesondere Knotenpunkte bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen 90 °-Winkel einschließen. Es ist im Sinne der Erfindung insbesondere bevorzugt, dass sich zwischen den Sende- und Empfangselektroden des Flächensensors ein elektrostatisches Feld ausbildet, das empfindlich auf Veränderungen reagiert, wie zum Beispiel durch das Inkontaktbringen der Oberfläche eines Flächensensors mit einer elektrisch leitfähigen Vorrichtung beziehungsweise durch dessen Erdung, das heißt einem Abfluss von elektrischer Ladung.

Es ist im Sinne der Erfindung bevorzugt, dass der Touch-Controller die Elektroden vorzugsweise so ansteuert, dass zwischen jeweils einer oder mehreren Sendeelektroden und einer oder mehreren Empfangselektroden ein Signal übertragen wird, bei dem es sich vorzugsweise um ein elektrisches Signal, beispielsweise eine Spannung, eine Stromstärke oder ein Potential(unterschied) handeln kann. Diese elektrischen Signale in einem kapazitiven Flächensensor werden vorzugsweise vom Touch-Controller ausgewertet und für das Betriebssystem des Gerätes aufbereitet. Die vom Touch-Controller an das Betriebssystem übermittelten Informationen beschreiben sogenannte einzelne "Touches", die man sich jeweils als einzelne erkannte Berührungen vorstellen kann.

Diese Touches sind bevorzugt durch die Parameter x-Koordinate des Touches, y-Koordinate des Touches, Zeitstempel des Touches und Typ des Touches gekennzeichnet. Die Parameter x- und y-Koordinate beschreiben die Position der Eingabe auf dem Touchscreen. Jedem Koordinatenpaar ist vorzugsweise ein Zeitstempel zugeordnet, der beschreibt, wann die Eingabe an der entsprechenden Stelle stattgefunden hat. Dem Fachmann ist bekannt, dass folgende Typen für Touch-Signale existieren: Touch Start, Touch Move, Touch End und Touch Cancel. Der Begriff "Touch Start" beschreibt vorzugsweise den Beginn einer Touch-Eingabe durch den Nutzer. Dies kann beispielsweise durch eine Berührung des Nutzers geschehen. Der Begriff "Touch Move" beschreibt vorzugsweise die Bewegung einer Eingabe auf dem Touchscreen ohne beispielsweise den Finger vom Touchscreen zu heben. Der Begriff "Touch End" beschreibt vorzugsweise das Ende einer Touch Eingabe, was beispielsweise durch ein Abheben eines Fingers vom Touchscreen durch einen Nutzer erfolgen kann. Der Begriff "Touch Cancel" beschreibt vorzugsweise einen Zustand, bei dem vom Touch-Controller die Touch-Eingaben abgebrochen werden. Dies kann beispielsweise erforderlich sein, wenn zu viele Touch-Eingaben gleichzeitig detektiert werden. Das zeitabhängige Signal im Sinne der Erfindung umfasst vorzugsweise eine Menge an solchen Touches beziehungsweise Touch-Eingaben. Mit anderen Worten ist es im Sinne der Erfindung bevorzugt, dass das zeitabhängige Signal von einer Menge von Touches und/oder Touch-Eingaben gebildet wird. Diese Signale innerhalb des Flächensensors, die im Rahmen der Erfindung zeitabhängige Signale sind, können durch die Anordnung der Einzelelemente auf dem kartenähnlichen Objekt festgelegt werden.

Es ist im Sinne der Erfindung bevorzugt, dass das zeitabhängige Signal, das auf einem Flächensensor durch eine Relativbewegung zwischen einem Eingabemittel und dem kartenähnlichen Objekt erzeugt wird, durch die Anordnung der Einzelelemente auf dem kartenähnlichen Objekt verändert wird und sich insbesondere unterscheidet von einer Eingabe eines Eingabemittels auf einem Flächensensor, die direkt, das heißt vorzugsweise ohne die Verwendung eines kartenähnlichen Objekts, erfolgt. Es werden insbesondere zwei Situationen unterschieden: zum einen eine direkte dynamische Eingabe auf einem Flächensensor mit einem Eingabemittel und zum anderen eine dynamische Eingabe, bei der zwischen Eingabemittel und Flächensensor ein kartenähnliches Objekt zwischengeschaltet ist. Dabei ist es im Sinne der Erfindung bevorzugt, die direkte Eingabe mit einem Eingabemittel auf dem Flächensensor als Referenz-Eingabe zu bezeichnen. Es ist im Sinne der Erfindung bevorzugt, dass durch die Anordnung der Einzelelemente auf dem kartenähnlichen Objekt eine Veränderung der direkten dynamischen Eingabe erfolgt, wodurch auf dem Flächensensor ein zeitabhängiges Signal erzeugt wird. In einer bevorzugten Ausführungsform der Erfindung ist es vorgesehen, dass die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber der Referenz-Eingabe mit dem Eingabemittel, die vorzugsweise ohne Verwendung des kartenähnlichen Objekts erfolgt, verändert ist. Dieser Umwandlungsprozess wird im Sinne der Erfindung bevorzugt als Modulation, Festlegung, Veränderung, Verzerrung oder Verschiebung bezeichnet.

In einer bevorzugten Ausgestaltung der Erfindung ist das resultierende zeitabhängige Signal auf dem kapazitiven Flächensensor bezüglich Position, Geschwindigkeit, Richtung, Form, Unterbrechung des Signals, Frequenz und/oder Signalstärke mindestens teilweise verändert gegenüber einem Referenzsignal, welches durch eine Referenz-Eingabe mit dem Eingabemittel, die ohne Verwendung des kartenähnlichen Objekts erfolgt, festgelegt wird. Es ist im Sinne der Erfindung bevorzugt, dass es sich um das resultierende zeitabhängige Signal handelt, welches vorzugsweise durch das vorgeschlagene Verfahren erzeugt werden kann. Ausgehend von einer beispielhaften Eingabe in Form einer geraden, strichförmigen Bewegung auf einem Einzelelement der elektrisch leitfähigen Struktur bedeutet dies im Sinne der Erfindung bevorzugt, dass das erzeugte zeitabhängige Signal aufgrund der Modulation durch das kartenähnliche Objekt, beziehungsweise ihre elektrisch leitfähige Struktur, gegenüber der geraden, strichförmigen Eingabe des Eingabemittels eine abweichende Position, Richtung, Form und/oder Signalstärke aufweisen kann, das heißt beispielsweise räumlich versetzt, verzerrt und/oder verschoben vom Flächensensor erkannt wird, eine andere Form als die gerade, strichförmige Bewegung aufweist, in eine andere Richtung zeigt oder eine unerwartete Signalstärke aufweist.

Wenn beispielsweise ein Nutzer mit seinem Finger als Anwendungsbeispiel eines Eingabemittels im Sinne der Erfindung über einen kapazitiven Flächensensor streicht, so detektiert der Flächensensor diese Bewegung im Wesentlichen an den Positionen auf dem Bildschirm des Flächensensors, die von dem Finger, d.h. dem Eingabemittel, faktisch berührt werden. Eine gerade, strichförmige Bewegung des Fingers wird vom Flächensensor vorzugsweise im Wesentlichen als gerade, strichförmige Bewegung detektiert werden. Eine solche Eingabe ohne das Vorhandensein eines kartenähnlichen Objekts wird im Sinne der Erfindung vorzugsweise als Referenzeingabe bezeichnet.

Im Kontext der vorliegenden Erfindung ist es bevorzugt vorgesehen, dass zwischen dem Eingabemittel und dem Flächensensor ein kartenähnliches Objekt angeordnet vorliegt, wobei das kartenähnliche Objekt insbesondere auf den Flächensensor aufgelegt werden kann. Das kartenähnliche Objekt umfasst eine elektrisch leitfähige Struktur umfassend vorzugsweise elektrisch leitfähige Einzelelemente. Es ist in einem möglichen Anwendungsbeispiel der Erfindung vorgesehen, dass der Nutzer des kartenähnlichen Objekts oder des Flächensensors einen Finger über das kartenähnliche Objekt bewegt, und zwar insbesondere über die elektrisch leitfähige Struktur. Das kartenähnliche Objekt liegt dabei vorzugsweise auf dem Flächensensor auf, so dass durch die Bewegung des Nutzerfingers die Einzelelemente der elektrisch leitfähigen Struktur, die der Nutzer berührt, für den Flächensensor "sichtbar" werden, indem sie aktiviert werden. Die Erfinder haben erkannt, dass durch die Verwendung eines kartenähnlichen Objekts, das eine elektrisch leitfähige Struktur umfasst, eine Eingabe auf einem Flächensensor im Vergleich zu einer Referenzeingabe verändert werden kann. Diese Veränderung wird im Sinne der Erfindung bevorzugt als Modulation bezeichnet. Sie erfolgt vorzugsweise dadurch, dass die Einzelelemente der elektrisch leitfähigen Struktur durch die Berührung mit dem Eingabemittel aktiviert werden, wodurch der Flächensensor sie detektieren kann, wobei das resultierende zeitabhängige Signal durch die Anordnung der Einzelelemente auf dem kartenähnlichen Objekt beispielsweise räumlich verzerrt ist im Vergleich zu einer Referenzeingabe. Wenn beispielsweise ein Eingabemittel entlang einer gedachten geraden Linie auf dem kartenähnlichen Objekt ohne elektrische leitfähige Strukturen erfolgt, dann würde der Flächensensor als Referenzeingabe eine gerade Linienbewegung des Eingabemittels detektieren. Wenn aber nun zwischen dem Eingabemittel und dem Flächensensor ein kartenähnliches Objekt angeordnet vorliegt, auf dem die Einzelelemente der elektrisch leitfähigen Struktur beispielsweise auf einer linken Seite des kartenähnlichen Objekts angeordnet vorliegen, wird der Flächensensor, wenn ein Eingabemittel auf dem kartenähnlichen Objekt bewegt wird, ein resultierendes Signal detektieren, das gegenüber der Referenzeingabe nach links verschoben beziehungsweise verzerrt ist. Das zeitabhängige Signal, das im Kontext der vorliegenden Erfindung erzeugt wird, entspricht vorzugsweise der Detektion der Relativbewegung zwischen Eingabemittel und kartenähnlichem Objekt nach Ablenkung, Verzerrung und/oder Verschiebung durch die elektrisch leitfähige Struktur. Es ist zeitabhängig, weil eine Bewegung s(t) erfolgt, so dass auch das detektierte Signal insofern zeitabhängig ist, als dass es vorzugsweise eine Funktion der Zeit repräsentiert. Dies bedeutet im Sinne der Erfindung bevorzugt, dass das zeitabhängige Signal der zeitlichen Abfolge der des Eingabemittels auf dem kartenähnlichen Objekt entspricht, wobei die detektierten Positionen des resultierenden zeitabhängigen Signals, welche insbesondere durch die x- und y-Koordinaten der Touches gekennzeichnet sind, durch die elektrische leitfähige Struktur verglichen mit einem Referenzsignal, welches ohne kartenähnliches Objekt erzeugt wird, abgelenkt, verzerrt und/oder verschoben sein können. Diese Verzerrung, Ablenkung und/oder Verschiebung wird im Sinne der Erfindung vorzugsweise als eine Änderung der Position des zeitabhängigen Signals bezeichnet.

Es kann im Sinne der Erfindung auch bevorzugt sein, dass Abweichungen bei der Geschwindigkeit auftreten, das heißt beispielsweise eine schnelle Bewegung des Eingabemittels in ein langsames zeitabhängiges Signal moduliert wird. Es kann außerdem bevorzugt sein, dass das zeitabhängige Signal ein spezifisches Geschwindigkeitsprofil aufweist. Wenn beispielsweise ein Eingabemittel entlang einer gedachten geraden Linie auf dem kartenähnlichen Objekt ohne elektrisch leitfähige Strukturen erfolgt, dann würde der Flächensensor als Referenzeingabe ein zeitabhängiges Signal detektieren, welches eine gerade Linie darstellt und eine nahezu konstante Geschwindigkeit aufweist. Wenn aber nun zwischen dem Eingabemittel und dem Flächensensor ein kartenähnliches Objekt angeordnet vorliegt, auf dem die Einzelelemente der elektrisch leitfähigen Struktur beispielsweise in bestimmten Abständen auf dem kartenähnlichen Objekt angeordnet vorliegen, wird der Flächensensor, wenn ein Eingabemittel auf dem kartenähnlichen Objekt bewegt wird, ein resultierendes Signal detektieren, das gegenüber der Referenzeingabe ein spezifisches Geschwindigkeitsprofil aufweist. In diesem Fall kommt das Eingabemittel bei Bewegung über das kartenähnliche Objekt nach und nach mit den elektrisch leitfähigen Elementen auf dem kartenähnlichen Objekt in Wirkkontakt, d.h. das Eingabemittel überdeckt die elektrisch leitfähigen Elemente nach und nach. Erreicht das Eingabemittel ein elektrisch leitfähiges Einzelelement, wird zu diesem Zeitpunkt bevorzugt die Position des resultierenden Signals in die Richtung des Einzelelements verschoben.

In einem konkreten Beispiel wird das Eingabemittel entlang einer gedachten geraden Linie in y-Richtung mit gleichmäßiger Geschwindigkeit auf dem kartenähnlichen Objekt bewegt. Solange das Eingabemittel nicht mit elektrisch leitfähigen Elementen in Kontakt kommt, ist das resultierende zeitabhängige Signal im Wesentlichen durch Touches gekennzeichnet, die sich im Wesentlichen durch den Zeitstempel und die jeweilige y-Koordinate unterscheiden, wobei die Bewegungsgeschwindigkeit im Wesentlichen konstant ist. Erreicht das Eingabemittel ein elektrisch leitfähiges Einzelelement, wird zu diesem Zeitpunkt bevorzugt die Position des resultierenden Signals in die Richtung des Einzelelements verschoben, d.h. der einzelne Touch ist im Vergleich zu den vorangegangenen Touches deutlich stärker hinsichtlich der y-Koordinate verschoben. Mit Hilfe der Parameter der einzelnen Touches des resultierenden zeitabhängigen Signals kann ein Geschwindigkeitsprofil berechnet werden. Es ist im Sinne der Erfindung bevorzugt, dass Schwankungen im Geschwindigkeitsprofil insbesondere dann zu erkennen sind, wenn das Eingabemittel mit elektrisch leitfähigen Einzelelementen in Kontakt kommt.

Es kann im Sinne der Erfindung auch bevorzugt sein, dass es zur Unterbrechung des Signals kommt, beispielsweise wenn eine kontinuierliche Bewegung auf der elektrisch leitfähigen Struktur des kartenähnlichen Objekts erfolgt, wobei die elektrisch leitfähige Struktur, bevorzugt bewusst, Lücken aufweist, so dass das zeitabhängige Signal, das vom Flächensensor detektiert wird, Unterbrechungen und/oder Pausen aufweist, das heißt beispielsweise nicht mehr kontinuierlich ist und/oder beispielsweise "hüpft". Es kann darüber hinaus bevorzugt sein, dass durch die Ausgestaltung der elektrisch leitfähigen Struktur auf dem kartenähnlichen Objekt das erzeugte zeitabhängige Signal Unterbrechungen aufweist. Es kann auch bevorzugt sein, dass eine regelmäßig wiederkehrende Abfolge von Signalportionen erzeugt wird, die gemeinsam das zeitabhängige Signal bilden, dem eine Frequenz zugeordnet werden kann.

Es ist im Sinne der Erfindung bevorzugt, dass die Eingabe auf dem kartenähnlichen Objekt mit einem Eingabemittel erfolgt. Die Bewegung des Eingabemittels auf dem kartenähnlichen Objekt kann beispielsweise eine geradlinige Bewegung in Form eines Strichs sein. Eine solche strichförmige Bewegung würde von einem Flächensensor, wenn sie direkt auf dem berührungsempfindlichen Display ausgeführt würde, als strichförmige Eingabe erkannt. Wenn jedoch die strichförmige Bewegung auf einem erfindungsgemäßen kartenähnlichen Objekt, das eine elektrisch leitfähige Struktur aufweist, ausgeführt wird, so "sieht" der Flächensensor eine Momentaufnahme, die durch die räumliche Ausgestaltung der elektrisch leitfähigen Struktur des kartenähnlichen Objekts verändert ist, das heißt in der Regel nicht mehr strichförmig sein wird, wenn nicht zufällig alle Elemente der elektrisch leitfähigen Struktur ausschließlich symmetrisch und/oder kongruent zueinander angeordnet vorliegen. Somit unterscheiden sich die tatsächliche Bewegung des Eingabemittels auf dem Objekt und die Wahrnehmung des kapazitiven Flächensensors von dieser Bewegung, wobei diese Umwandlung von dem kartenähnlichen Objekt durch die räumliche Anordnung der Bestandteile und/oder Elemente der elektrisch leitfähigen Struktur bewirkt wird und im Sinne der Erfindung bevorzugt als Modulation, Festlegung, Veränderung, Verzerrung oder Verschiebung bezeichnet wird. Es ist im Sinne der Erfindung bevorzugt, dass die Bewegung des Eingabemittels auf dem kartenähnlichen Objekt als Eingabe bezeichnet wird und die Wahrnehmung des Flächensensors, also das, was der Flächensensor von der Eingabe, moduliert durch das Objekt, erkennt, als zeitabhängiges Signal.

Die Erzeugung des zeitabhängigen Signals auf dem kapazitiven Flächensensor erfolgt bevorzugt durch die Umwandlung einer Eingabe durch das kartenähnliche Objekt in ein zeitabhängiges Signal, wobei das zeitabhängige Signal vorzugsweise im kapazitiven Flächensensor erzeugt wird. Diese Formulierung bedeutet im Sinne der Erfindung bevorzugt, dass das zeitabhängige Signal durch eine Relativbewegung zwischen einem Eingabemittel und dem kartenähnlichen Objekt erzeugt wird, wobei vom Flächensensor vorzugsweise ein zeitlich veränderliches Signal detektiert wird. Da die Eingabe auf dem kartenähnlichen Objekt und die Erkennung auf dem Flächensensor erfolgen, wird im Sinne der Erfindung bevorzugt von einer Übertragung des Signals gesprochen.

Da die elektrisch leitfähige Struktur sehr flexibel gestaltet werden kann und darüber hinaus durch die Vorgabe verschiedener Bewegungsmöglichkeiten auf dem kartenähnlichen Objekt verschiedene Bewegungen des Eingabemittels denkbar sind, ist es möglich, ein Verfahren bereitzustellen, mit dem mittels des kartenähnlichen Objektes eine sehr hohe Datendichte abrufbar ist. Es war vollkommen überraschend, dass die Vorrichtung mit einer elektrisch leitfähigen Struktur gemäß der vorliegenden Erfindung beispielsweise eine Datenkapazität von bevorzugt mindestens 12 bit, besonders bevorzugt mindestens 16 bit aufweisen kann. Es war völlig überraschend, dass diese Datenkapazität bevorzugt auf einer kleinen Oberfläche realisiert werden kann und somit zu einer hohen Datendichte führt. Darüber hinaus ist das Verfahren besonders nutzerfreundlich, da bei seiner Nutzung das kartenähnliche Objekt unkompliziert auf den Flächensensor aufgelegt wird. Es muss nicht mehr, wie bei konventionellen Datenträgern und Signalübertragungsverfahren zwischen Flächensensoren und Datenträgern darauf geachtet werden, dass bestimmte Bereiche des kartenähnlichen Objekts nicht oder auf besonderen Bereichen des Flächensensors aufliegen.

Die Vorgabe verschiedener Bewegungsmöglichkeiten des Eingabemittels auf dem kartenförmigen Objekt eröffnet völlig neue Interaktionsmöglichkeiten des Nutzers mit dem kapazitiven Datenträger. In einer bevorzugten Ausführungsform der Erfindung sind mehrere voneinander unabhängige elektrisch leitfähige Strukturen auf dem kartenähnlichen Objekt angeordnet. In einem Ausführungsbeispiel sind zwei elektrisch leitfähige Strukturen angeordnet, die jeweils eigene Bedienpfade aufweisen, die in diesem Ausführungsbeispiel einmal vertikal und einmal horizontal verlaufen. Damit ergeben sich insgesamt vier Interaktionsrichtungen: von oben nach unten, von unten nach oben, von links nach rechts und von rechts nach links. Jede elektrisch leitfähige Struktur kann in Abhängigkeit der Richtung der Relativbewegung unterschiedliche Aktionen auf dem Gerät, welches den kapazitiven Flächensensor beinhaltet, auslösen. Es war völlig überraschend, dass mit dem selben kartenförmigen Objekt eine Vielzahl unterschiedlicher Aktionen ausgelöst werden kann. Dies stellt einen signifikanten Vorteil gegenüber dem Stand der Technik dar. Sowohl bei Barcodes, 2D-Barcodes, Funketiketten, als auch bei kapazitiven Datenträgern, die aus dem Stand der Technik bekannt sind, beschränkt sich die Anwendung im Wesentlichen auf die Identifikation des Objektes. Die Erfindung eröffnet überraschenderweise zusätzliche Interaktionsmöglichkeiten.

Die Erzeugung des zeitabhängigen Signals erfolgt im Rahmen der Erfindung durch eine Relativbewegung zwischen einem Eingabemittel und dem kartenähnlichen Objekt. Das bedeutet im Sinne der Erfindung bevorzugt, dass entweder das Eingabemittel gegenüber dem kartenähnlichen Objekt bewegt wird oder dass das kartenähnliche Objekt gegenüber dem Eingabemittel bewegt wird oder dass sich sowohl das Eingabemittel, als auch das Objekt bewegen, und zwar vorzugsweise nicht in die gleiche Richtung und mit der gleichen Geschwindigkeit, da dies eine Parallelbewegung hervorrufen würde, die gerade keine Relativbewegung im Sinne der Erfindung darstellt. Es ist im Sinne der Erfindung insbesondere bevorzugt, dass die Lage, Richtung und/oder Geschwindigkeit der Relativbewegung die Erzeugung des zeitabhängigen Signals beeinflusst und insbesondere bestimmt, wie das zeitabhängige Signal räumlich beschaffen ist. Dies erfolgt insbesondere in Zusammenwirken mit der geometrischen Gestalt der elektrisch leitfähigen Struktur, mit der eine durch die Relativbewegung bewirkte Eingabe in das zeitabhängige Signal umwandelt und/oder moduliert.

Es ist im Sinne der Erfindung bevorzugt, dass die Relativbewegung zwischen dem Eingabemittel und dem kartenähnlichen Objekt bevorzugt als zweiter Kontakt bezeichnet wird, der im Kontext der vorliegenden Erfindung stets dynamisch ausgebildet ist.

In einem zweiten Aspekt betrifft die Erfindung ein Verfahren zur Identifikation eines kartenähnlichen Objekts, das die folgenden Schritte umfasst:

a) Bereitstellung des kartenähnlichen Objekts mit einer elektrisch leitfähigen Struktur, die eine Vielzahl von Einzelelementen umfasst,

b) Auflegen des kartenähnlichen Objekts auf einen kapazitiven Flächensensor, wodurch ein erster Kontakt ausgebildet wird,

c) Ausführen einer Relativbewegung zwischen einem Eingabemittel und dem kartenähnlichen Objekt, wodurch ein zweiter Kontakt ausgebildet wird,

d) Erzeugung eines zeitabhängigen Signals in Abhängigkeit von der Relativbewegung,

e) Auswertung des zeitabhängigen Signals auf dem kapazitiven Flächensensor durch das den Flächensensor beinhaltende Gerät zur Identifikation des kartenähnlichen Objekts,

wobei das zeitabhängige Signal, das auf dem kapazitiven Flächensensor erzeugt wird, durch die Anordnung der Einzelelemente auf dem kartenähnlichen Objekt festgelegt wird.

Die oben genannten Vorteile und überraschenden technischen Wirkungen des Verfahrens zur Erzeugung des zeitabhängigen Signals gelten auch für das Identifikationsverfahren. Analog gelten die Vorteile und überraschenden technischen Wirkungen des Identifikationsverfahrens auch für das Verfahren zur Erzeugung des zeitabhängigen Signals. Es ist insbesondere bevorzugt, dass das Identifikationsverfahren auch zur Erzeugung eines zeitabhängigen Signals verwendet und/oder das Verfahren zur Erzeugung eines zeitabhängigen Signals auch zur Identifikation eines kartenähnlichen Objekts verwendet werden kann.

Der Begriff "Identifikation" bedeutet im Sinne der Erfindung bevorzugt, dass ein kartenähnliches Objekt durch den Flächensensor erkannt wird und beispielsweise einem im elektrischen Gerät, welches den Flächensensor beinhaltet, hinterlegten Datensatz zugeordnet werden kann. Dabei kann der Datensatz beispielsweise auch nicht im elektrischen Gerät direkt hinterlegt sein, aber für diesen zugänglich sein, indem er beispielsweise auf einem Server, im Internet und/oder in einer Cloud abrufbar ist. Die Erkennung des kartenähnlichen Objekts durch den Flächensensor erfolgt insbesondere durch die Erkennung der elektrisch leitfähigen Struktur, die auf dem kartenähnlichen Objekt angeordnet ist. Diese elektrisch leitfähige Struktur wird insbesondere durch die Einzelelemente bestimmt, die vorzugsweise in ihrer Gesamtheit die elektrisch leitfähige Struktur bilden. Es ist bevorzugt, dass das Identifikationsverfahren mit einem kartenähnlichen Objekt durchgeführt wird, das einen weiteren Aspekt der vorliegenden Erfindung bildet und später ausführlich beschrieben wird. Es kann aber auch bevorzugt sein, dass Verfahren mit einem anderen Objekt auszuführen, solange es eine elektrisch leitfähige Struktur mit Einzelelementen aufweist.

Das kartenähnliche Objekt wird auf den Flächensensor aufgelegt, wodurch ein erster Kontakt ausgebildet wird. Es ist im Sinne der Erfindung insbesondere bevorzugt, dass ein erster Kontakt zwischen dem Flächensensor und dem kartenähnlichen Objekt gebildet wird. In einer weiteren Ausgestaltung der Erfindung, die sich sowohl auf das Verfahren zur Erzeugung des zeitabhängigen Signals, als auch auf das Identifikationsverfahren bezieht, umfasst die Erfindung einen zweiten Kontakt, der vorzugsweise zwischen dem kartenähnlichen Objekt und dem Eingabemittel gebildet wird. Es ist im Sinne der Erfindung bevorzugt, dass diese Kontakte auch als Wirkkontakte bezeichnet werden.

Erfindungsgemäß umfasst das Verfahren die Bereitstellung eines ersten Kontakts und eines zweiten Kontakts, wobei der erste Kontakt zwischen dem kartenähnlichen Objekt und dem kapazitiven Flächensensor besteht und der zweite Kontakt zwischen dem kartenähnlichen Objekt und dem Eingabemittel, wobei mindestens der zweite Kontakt dynamisch ausgebildet ist.

Es ist im Sinne der Erfindung insbesondere bevorzugt, dass das kartenähnliche Objekt auf dem Flächensensor aufgelegt wird, wobei das kartenähnliche Objekt von einem Eingabemittel berührt wird, wodurch bevorzugt der zweite Kontakt im Sinne der Erfindung hergestellt wird. Vorzugsweise berühren das Eingabemittel und der Flächensensor einander nicht, das heißt es besteht vorzugsweise kein direkter körperlicher Kontakt zwischen dem Eingabemittel und dem Flächensensor. Allerdings besteht zwischen dem Eingabemittel und dem Flächensensor vorzugsweise eine räumliche Beziehung, insofern als dass eine Relativbewegung zwischen dem Eingabemittel und dem Flächensensor festgestellt werden kann oder nicht. Es ist im Sinne der vorliegenden Erfindung insbesondere bevorzugt, dass sowohl der erste Kontakt, als auch der zweite Kontakt gleichzeig miteinander vorliegen.

Im Folgenden werden zwei besonders bevorzugte Ausgestaltungen der Erfindung hinsichtlich der Kontakte und der räumlichen Beziehungen zwischen den drei Elementen 1) kartenähnliches Objekt, 2) Flächensensor und 3) Eingabemittel beschrieben. In einer ersten bevorzugten Ausführungsform der Erfindung ist der erste Kontakt, der vorzugsweise zwischen kartenähnlichen Objekt und Flächensensor besteht, stationär ausgebildet, der zweite Kontakt, der vorzugsweise zwischen Eingabemittel und kartenähnlichen Objekt besteht, dynamisch ausgebildet und die räumliche Beziehung zwischen Eingabemittel und Flächensensor ist dynamisch. Dabei kann das kartenähnliche Objekt beispielsweise auf dem Flächensensor angeordnet und/oder auf diesen aufgelegt werden, ohne dass das Objekt bewegt wird, während das Eingabemittel auf dem kartenähnlichen Objekt bewegt wird. Daraus ergibt sich inhärent, dass sich das Eingabemittel auch relativ zu dem nicht-bewegten Flächensensor bewegt, weswegen die räumliche Beziehung zwischen Flächensensor und Eingabemittel im Kontext dieser bevorzugten Ausführungsform der Erfindung bevorzugt als dynamisch beschrieben wird.

In einer zweiten bevorzugten Ausführungsform der Erfindung ist der erste Kontakt, der vorzugsweise zwischen kartenähnlichen Objekt und Flächensensor besteht, dynamisch ausgebildet, der zweite Kontakt, der vorzugsweise zwischen Eingabemittel und kartenähnlichen Objekt besteht, ebenfalls dynamisch und die räumliche Beziehung zwischen Eingabemittel und Flächensensor stationär ausgebildet. In dieser bevorzugten Ausführungsform der Erfindung kann das kartenähnliche Objekt beispielsweise auf dem Flächensensor angeordnet und/oder auf diesen aufgelegt werden. Zusätzlich wird das Eingabemittel in dieser bevorzugten Ausführungsform auf das kartenähnliche Objekt aufgelegt und das Objekt unter dem Eingabemittel "durchgezogen". Dadurch bewegt sich das Eingabemittel gegenüber dem Flächensensor nicht, das heißt es findet keine Relativbewegung zwischen Eingabemittel und Flächensensor statt und Eingabemittel und Flächensensor sind räumlich stationär zueinander angeordnet. Andererseits bewegen sich Eingabemittel und kartenähnliches Objekt sowie kartenähnliches Objekt und Flächensensor zueinander, was vorteilhafterweise durch die Weg- oder Durchziehbewegung des kartenähnlichen Objekts erreicht wird.

Beiden Ausführungsformen ist bevorzugt gemein, dass der zweite Kontakt zwischen kartenähnlichen Objekt und Eingabemittel stets dynamisch ausgebildet ist.

Wenn der Kontakt zwischen kartenähnlichen Objekt und Eingabemittel, der im Sinne der Erfindung vorzugsweise als zweiter Kontakt bezeichnet wird, dynamisch ausgestaltet ist, kann es sich bei der Bewegung des Eingabemittels beispielsweise um eine Gleit-, Wisch-, Streich-, Zug- oder Schubbewegung handeln, ohne darauf beschränkt zu sein. Es kann im Sinne der Erfindung auch bevorzugt sein, dass mindestens ein Bereich auf dem kartenähnlichen Objekt optisch markiert oder haptisch hervorgehoben ist, der für die Berührung und/oder Kontaktierung durch ein Eingabemittel eingerichtet ist. Eine haptische Hervorhebung kann beispielsweise durch das Aufbringen eines Lacks erreicht werden, der vorzugsweise stellenweise auf der elektrisch leitfähigen Struktur, insbesondere dem Eingabebereich, aufgebracht wird und dort die Stellen der elektrisch leitfähigen Struktur markiert, die mit dem Eingabemittel berührt werden sollen, um die dynamische Eingabe zu erzeugen. Tests haben gezeigt, dass ein Finger, der als Eingabemittel verwendet wird, besonders gut mit einer Lackmarkierung über den Eingabebereich der elektrisch leitfähigen Struktur geführt werden kann, indem er in einem Anfangsbereich auf den lackierten Bereich der elektrisch leitfähigen Struktur aufgesetzt wird und dann dem lackierten Bereich folgt. Dabei hat es sich als besonders vorteilhaft erwiesen, wenn der lackierte Bereich streifenförmig ausgebildet ist und eine bevorzugte Breite im Größenordnungsbereich eines menschlichen Fingers aufweist. Darüber hinaus kann die haptische Hervorhebung auch durch Druckweiterverarbeitungsverfahren, wie z.B. Rillen, Prägen und/oder Falten, erreicht werden, wodurch vorzugsweise dreidimensionale Führungslinien erzeugt werden, die dem Nutzer den Eingabebereich verdeutlichen.

Im Falle, dass das kartenähnliche Objekt gegenüber dem Eingabemittel bewegt wird, kann es sich beispielsweise um eine Weg- oder Durchziehbewegung handeln, bei der beispielsweise ein Finger als Eingabemittel locker auf dem Objekt aufgelegt wird, das auf einem Flächensensor angeordnet ist, und das Objekt beispielsweise zug- oder ruckartig zwischen Eingabemittel und Flächensensor weggezogen und/oder entfernt wird.

Es ist im Sinne der Erfindung bevorzugt, dass das zeitabhängige Signal durch eine Relativbewegung zwischen einem Eingabemittel und dem kartenähnlichen Objekt erzeugt wird. Indem sich das Eingabemittel und das kartenähnliche Objekt relativ zueinander bewegen, wird insbesondere eine Relativbewegung zwischen dem Eingabemittel und der elektrisch leitfähigen Struktur auf dem kartenähnlichen Objekt bewirkt, so dass vorzugsweise mindestens ein Einzelelement der elektrisch leitfähigen Struktur durch das Eingabemittel kontaktiert wird, wodurch es vorteilhafterweise "aktiviert", das heißt für den Flächensensor "sichtbar" wird.

Dieses Sichtbarwerden beruht auf einer Kopplung zwischen dem kapazitiven Flächensensor und der elektrisch leitfähigen Struktur, wenn beispielsweise eine Erdung der elektrisch leitfähigen Struktur stattfindet, beispielsweise durch die Berührung der Struktur oder eines Elementes der Struktur durch ein Eingabemittel. Wenn ein Eingabemittel die Einzelelemente der elektrisch leitfähigen Struktur berührt, kann es zu einem Ladungsträgeraustausch zwischen Eingabemittel und Struktur kommen. Dies führt im Sinne der Erfindung bevorzugt zu einer Änderung des elektrostatischen Feldes zwischen den Elektroden in einem Flächensensor und/oder zu einer messbaren Änderung der Kapazität. Die Änderung des elektrostatischen Feldes kann beispielsweise durch ein Inkontaktbringen des Flächensensors mit einem kartenähnlichen Objekt bewirkt werden, wodurch im Sinne der Erfindung ein erster Kontakt gebildet wird, wobei das kartenähnliche Objekt gleichzeitig in Kontakt mit einem Eingabemittel vorliegt, wodurch im Sinne der Erfindung ein zweiter Kontakt gebildet wird. Es ist demnach im Sinne der Erfindung bevorzugt, dass der erste Kontakt und der zweite Kontakt gleichzeitig bestehen und das kartenähnliche Objekt zwischen Flächensensor und Eingabemittel angeordnet vorliegt. Es ist im Sinne der vorliegenden Erfindung insbesondere bevorzugt, dass mindestens der zweite Kontakt dynamisch ausgebildet ist. Im Kontext der vorliegenden Erfindung bewirkt die dynamische Ausbildung des zweiten Kontakts zwischen kartenähnlichen Objekt und Eingabemittel, dass das Signal zwischen den Elektroden im Flächensensor verändert wird. In der Regel wird das Signal vermindert, weil das Eingabemittel einen Teil des Signals von der Sendeelektrode aufnimmt und so ein geringeres Signal an der Empfangselektrode ankommt. Es ist im Sinne der Erfindung insbesondere bevorzugt, dass die Einzelelemente der elektrisch leitfähigen Struktur hinsichtlich Größe, Abstand und Form so ausgebildet sind, dass das aus der Relativbewegung resultierende zeitabhängige Signal auf dem kapazitiven Flächensensor gegenüber einer Referenz-Eingabe mit dem Eingabemittel, die ohne Verwendung des kartenähnlichen Objekts erfolgt, verändert sein kann.

Wenn sich beispielsweise das Eingabemittel über die elektrisch leitfähige Struktur des kartenähnlichen Objekts bewegt und somit im Sinne der Erfindung vorzugsweise einen dynamischen zweiten Kontakt erzeugt, werden zum Beispiel nacheinander die einzelnen Elemente, die gemeinsam die elektrisch leitfähige Struktur bilden und bevorzugt als Einzelelemente bezeichnet werden, abgefahren, das heißt beispielsweise nacheinander aktiviert. Es kann beispielsweise bevorzugt sein, dass mindestens ein oder zwei oder mehrere Einzelelemente gemeinsam und/oder gleichzeitig vom Eingabemittel berührt werden, wodurch auf dem Flächensensor ein zeitlich veränderliches Signal erzeugt wird, das die räumliche Anordnung der "berührten" Einzelelemente auf dem kartenähnlichen Objekt widerspiegelt.

Dabei wird das zeitabhängige Signal, das vom Flächensensor detektiert wird, nicht allein durch die Bewegung des Eingabemittels relativ zum kartenähnlichen Objekt gebildet, sondern insbesondere auch durch die Anordnung der Einzelelemente der elektrisch leitfähigen Struktur auf dem kartenähnlichen Objekt. Es ist im Sinne der Erfindung besonders bevorzugt, dass durch die räumliche Ausgestaltung der elektrisch leitfähigen Struktur die Relativbewegung von kartenähnlichen Objekt und Eingabemittel zueinander in ein anders geformtes und verlaufendes zeitlich veränderliche Signal umgewandelt wird, indem das vom Flächensensor detektierte Signal durch die äußere Gestalt der elektrisch leitfähigen Struktur verzerrt wird.

Wenn in einer bevorzugten Ausführungsform eine elektrisch leitfähige Struktur aus identischen Streifen gleicher Länge besteht und das Eingabemittel in einer geradlinigen strichförmigen Bewegung mittig über diese vorzugsweise nebeneinander in gleicher Höhe angeordneten Streifen hinweggleitet, so wird der Flächensensor ein Signal detektieren, das im Wesentlichen dieser geradlinigen strichförmigen Bewegung entspricht und diese wiedergibt. Eine so charakterisierte, mittige Anordnung eines streifenförmigen Einzelelements wird im Sinne der Erfindung bevorzugt als Nullposition bezeichnet. Das so erhaltene Signal kann beispielsweise auf dem Display des Flächensensors dargestellt werden. Es wird bevorzugt als zeitabhängiges Signal bezeichnet, da es vorzugsweise einem Weg-Zeit-Diagramm in der Physik entspricht, mit dem der räumliche Verlauf einer Bewegung in Abhängigkeit von der Zeit dargestellt werden kann. Es ist im Sinne der Erfindung bevorzugt, dass im Wesentlichen keine bevorzugt räumliche Verzerrung des Signals auftritt, wenn alle beispielsweise streifenförmigen Einzelelemente der elektrisch leitfähigen Struktur in der Nullposition vorliegen. In einer bevorzugten Ausführungsform der Erfindung kann gedanklich eine virtuelle Zentrallinie konstruiert werden, die bevorzugt mittig durch die Einzelelemente verläuft und im Wesentlichen einer Schwerpunktslinie einer Ladungsträgerverteilung innerhalb der elektrisch leitfähigen Struktur entspricht.

In einer bevorzugten Ausgestaltung der Erfindung werden die Einzelelemente der elektrisch leitfähigen Struktur im Wesentlichen von Rechtecken gebildet, die im Wesentlichen parallel zueinander angeordnet vorliegen. Wenn die elektrisch leitfähige Struktur von parallel angeordneten Streifen gebildet wird, ist es im Sinne der Erfindung bevorzugt, dass die gedachte Zentrallinie im Wesentlichen senkrecht zu den Außenkanten der äußeren Streifen der elektrisch leitfähigen Struktur vorliegt.

Wenn aber einige oder alle der Streifen gegenüber der Nullposition verschoben sind, das heißt sie nicht mehr zentral um die gedachte Zentrallinie angeordnet vorliegen, kann eine bevorzugt räumliche Verzerrung des zeitlich veränderlichen Signals, das vom Flächensensor detektiert wird, auftreten. Wenn beispielsweise ein größerer Anteil eines streifenförmigen Einzelelements auf einer Seite A einer der Nullposition entsprechenden gedachten Zentrallinie der elektrisch leitfähigen Struktur angeordnet vorliegt, wird das zeitabhängige Signal in diese Richtung A verschoben, was im Sinne der Erfindung beispielsweise bevorzugt als Modulation, Verzerrung oder Änderung bezeichnet wird. Es ist im Sinne der Erfindung bevorzugt, dass der Grad der Verzerrung davon abhängt, wie stark ein Einzelelement gegenüber der Nullposition verschoben ist. Ein Einzelelement, das stark von der Nullposition abweicht, führt vorzugsweise zu einer starken Verzerrung des zeitabhängigen Signals, während eine schwache Abweichung von der Nullposition bevorzugt zu einer schwachen Verzerrung führt.

Wenn das Eingabemittel gleichzeitig mit mehreren Einzelelementen der elektrisch leitfähigen Struktur in Kontakt ist, überlagern sich die Verzerrungseffekte der Einzelelemente vorteilhafterweise bei der Erzeugung des zeitabhängigen Signals, so dass das erzeugte zeitabhängige Signal die räumliche Gestalt der elektrisch leitfähigen Struktur widerspiegelt, die durch die Relativbewegung von kartenähnlichem Objekt und Eingabemittel vom Flächensensor detektierbar wird. Die Umwandlung und/oder Modulation der Relativbewegung zu einem zeitabhängigen Signal auf dem Flächensensor findet vorzugsweise vor der Auswertung des Signals durch das Gerät, welches den Flächensensor beinhaltet, statt, wodurch vorteilhafterweise eine Identifikation des kartenähnlichen Objekts erreicht werden kann. Dazu kann beispielsweise das detektierte zeitabhängige Signal oder sein räumlicher Verlauf mit Daten(sätzen) aus einer Datenbank abgeglichen werden, die entweder auf dem elektronischen Gerät, welches den Flächensensor beinhaltet, hinterlegt oder für dieses auf andere Weise zugänglich sind.

Wenn in einer weiteren bevorzugten Ausführungsform die elektrisch leitfähige Struktur aus streifenförmigen Elementen gleicher Länge, aber unterschiedlicher Breite besteht und diese streifenförmigen Elemente bezüglich ihrer Länge zentriert auf dem kartenförmigen Objekt angeordnet und in variablen Abständen zueinander angeordnet sind und die geradlinige strichförmige Bewegung mittig über das kartenförmige Objekt erfolgt, kann das resultierende zeitabhängige Signal auf dem kapazitiven Flächensensor wie folgt beschrieben werden: der räumliche Verlauf des Signals ist im Wesentlichen durch eine annähernd konstante x-Koordinate und eine im Wesentlichen der Relativbewegung entsprechenden zeitabhängigen Änderung der y-Koordinate gekennzeichnet. Es tritt somit im Wesentlichen keine oder nur eine geringfügige räumliche Verzerrung des Signals auf. Das resultierende zeitabhängige Signal wird jedoch vorzugsweise gegenüber der Referenzeingabe ein spezifisches Geschwindigkeitsprofil aufweisen. Das Eingabemittel kommt bei Bewegung über das kartenähnliche Objekt nach und nach mit den elektrisch leitfähigen Elementen auf dem kartenähnlichen Objekt in Wirkkontakt, d.h. das Eingabemittel überdeckt die elektrisch leitfähigen Elemente nach und nach. Erreicht das Eingabemittel ein elektrisch leitfähiges Einzelelement, wird zu diesem Zeitpunkt plötzlich die Position des resultierenden Signals in die Richtung des Einzelelements verschoben.

In einem konkreten Beispiel wird das Eingabemittel entlang einer gedachten geraden Linie in y-Richtung mit gleichmäßiger Geschwindigkeit auf dem kartenähnlichen Objekt bewegt. So lange das Eingabemittel nicht mit elektrisch leitfähigen Elementen in Kontakt kommt, ist das resultierende zeitabhängige Signal vorzugsweise im Wesentlichen durch Touches gekennzeichnet, die sich im Wesentlichen durch den Zeitstempel und die jeweilige y-Koordinate unterscheiden, wobei die Geschwindigkeit der Touches im Wesentlichen konstant ist. Erreicht das Eingabemittel ein elektrisch leitfähiges Einzelelement, wird zu diesem Zeitpunkt plötzlich die Position des resultierenden Signals in die Richtung des Einzelelements verschoben, d.h. der einzelne Touch ist im Vergleich zu den vorangegangenen Touches deutlich stärker hinsichtlich der y-Koordinate verschoben. Mit Hilfe der Parameter der einzelnen Touches des resultierenden zeitabhängigen Signals kann ein Geschwindigkeitsprofil berechnet werden. Es ist im Sinne der Erfindung bevorzugt, dass Schwankungen im Geschwindigkeitsprofil bevorzugt dann zu erkennen sind, wenn das Eingabemittel mit elektrisch leitfähigen Einzelelementen in Kontakt kommt.

Der Begriff "im Wesentlichen" ist für den Fachmann nicht unklar, denn der Fachmann weiß, dass eine elektrisch leitfähige Struktur, die "im Wesentlichen von Rechtecken" gebildet wird, überwiegend aus Einzelelementen besteht, die rechteckig ausgestaltet sind, wobei die Struktur auch einige wenige Einzelelemente umfassen kann, die nicht rechteckig ausgestaltet sind. Diese nicht rechteckigen Einzelelemente können jede denkbare Form aufweisen, beispielsweise dreieckig, elliptisch, oval, rund, blumen-, stern-, rautenförmig oder eine Freihandform. Den Begriff "im Wesentlichen parallel" versteht der Fachmann so, dass die Einzelelemente der elektrisch leitfähigen Struktur im Rahmen der Aufbringungsgenauigkeit parallel aufgebracht werden. Wenn die Einzelelemente beispielsweise aufgedruckt werden, werden die Einzelelemente im Rahmen der Druckgenauigkeit aufgedruckt, wobei es beispielsweise zu Abweichungen von der Parallelität im Größenordnungsbereich von 0 bis 2 ° kommen kann.

In einer bevorzugten Ausführungsform der Erfindung ist es vorgesehen, dass die Einzelelemente der elektrisch leitfähigen Struktur hinsichtlich Größe, Abstand und Form so ausgebildet sind, dass das aus der Relativbewegung zwischen dem Eingabemittel und dem kartenähnlichen Objekt resultierende zeitabhängige Signal auf dem kapazitiven Flächensensor verändert ist gegenüber einem Referenzsignal, welches durch eine Referenz-Eingabe mit dem Eingabemittel, die ohne Verwendung des kartenähnlichen Objekts erfolgt, festgelegt wird, verändert ist.

In einem weiteren Aspekt betrifft die Erfindung ein kartenähnliches Objekt, wobei das kartenähnliche Objekt eine elektrisch leitfähige Struktur aufweist, die eine Vielzahl von Einzelelementen umfasst, die auf dem kartenähnlichen Objekt angeordnet vorliegen, , wobei die Einzelelemente der elektrisch leitfähigen Struktur hinsichtlich Größe, Abstand und Form so ausgebildet sind, dass ein aus einer Relativbewegung zwischen einem Eingabemittel und dem kartenähnlichen Objekt resultierendes zeitabhängiges Signal auf einem kapazitiven Flächensensor gegenüber einer Referenz-Eingabe mit dem Eingabemittel, die ohne Verwendung des kartenähnlichen Objekts erfolgt, verändert ist.

Es ist im Sinne der Erfindung insbesondere bevorzugt, dass das kartenähnliche Objekt dazu eingerichtet ist, die zuvor beschriebenen Verfahren auszuführen, beziehungsweise mit dem kartenähnlichen Objekt die zuvor beschriebenen Verfahren durchzuführen. In einer bevorzugten Ausgestaltung der Erfindung weisen die Einzelelemente der elektrisch leitfähigen Struktur eine Breite von 0,1 mm bis 20 mm und einen Abstand von 0,1 mm bis 30 mm auf. Es ist im Sinne der Erfindung am meisten bevorzugt, elektrisch leitfähige Strukturen mit einer Breite von nicht mehr als 6 mm zu verwenden, also beispielsweise elektrisch leitfähige Strukturen mit einer bevorzugten Breite von 0,1 bis 6 mm, wobei alle Werte zwischen 0,1 und 6 mm im Sinne der Erfindung bevorzugt sein sollen. Diese Abmessungsgrößenordnung stellt bevorzugt die Grenze für leitfähige Strukturen dar, die nicht unterschritten werden darf, damit der Flächensensor eine alleinstehende elektrisch leitfähige Struktur von einer anderen elektrisch leitfähigen Struktur unterscheiden kann. Ein besonderer Verdienst der vorliegenden Erfindung stellt es daher dar, dass Verfahren und Systeme bereitgestellt werden, mit denen eine elektrisch leitfähige Struktur ein Signal auf einem Flächensensor hervorrufen kann, obwohl die Einzelelemente der Struktur, wenn sie allein auf einem Datenträger angeordnet wären, nicht vom Flächensensor erkannt werden könnten, weil sie einzeln und für sich allein genommen zu klein wären, um vom Flächensensor aufgelöst und/oder detektiert zu werden. Dadurch unterscheidet sich die vorliegende Erfindung wesentlich von den im Stand der Technik beschriebenen elektrisch leitfähigen Strukturen, deren Bestandteile zumeist bewusst größer als beispielsweise 8 mm ausgebildet sind, um sicher vom Flächensensor erkannt zu werden. Die Ausbildung von elektrisch leitfähigen Strukturen, deren Bestandteile einzeln selbst von einem Flächensensor erkannt werden können, wird im Stand der Technik häufig als "Nachahmung von Fingerkuppen" bezeichnet, was mit der vorliegenden Erfindung gerade nicht beabsichtigt wird.

Durch diese bewusst ausgewählten Abmessungen der Einzelelemente wird vorteilhafterweise erreicht, dass die elektrisch leitfähige Struktur so eingerichtet sind, dass die im Wege einer Relativbewegung zwischen dem Eingabemittel und dem kartenähnlichen Objekt erzeugte Eingabe zu einem zeitabhängigen Signal umwandelbar ist, das heißt zu einem solchen moduliert werden kann, indem das Signal bewusst Verzerrungen ausgesetzt wird, die vorteilhafterweise von den Einzelelementen der leitfähigen Struktur hervorgerufen werden. Die Einzelelemente der elektrisch leitfähigen Struktur sind insbesondere so ausgestaltet, dass ein einzelnes Einzelelement, welches nicht in Wirkkontakt mit einem Eingabemittel steht, gerade nicht von einem Flächensensor detektiert und/oder erkannt werden kann.

Es war vollkommen überraschend, dass eine elektrisch leitfähige Struktur bereitgestellt werden kann, deren einzelne Bestandteile, d.h. die Einzelelemente ohne Wirkkontakt zu einem Eingabemittel kein Signal auf dem kapazitiven Flächensensor erzeugen, wobei die Elemente in ihrer Gesamtheit als elektrisch leitfähige Struktur überraschenderweise dazu eingerichtet sind, beispielsweise eine Ablenkung eines Signals auf dem Flächensensor zu bewirken. Die Erzeugung des zeitabhängigen Signals, das gegenüber einer Referenzeingabe eines Eingabemittels ohne kartenähnliches Objekt verändert sein kann, wird vorteilhafterweise durch das synergistische Zusammenwirken der Einzelelemente bewirkt, die in ihrer Gesamtheit die elektrisch leitfähige Struktur des kartenähnlichen Objekts bilden. Es stellt eine Abkehr vom Stand der Technik dar, eine elektrisch leitfähige Struktur zur Erkennung durch einen Flächensensor bereitzustellen, deren Einzelelemente nicht oder nur teilweise von einem Flächensensor detektiert werden können. Ein Fachmann auf dem einschlägigen Technikgebiet war bisher davon ausgegangen, dass eine elektrisch leitfähige Struktur, die von einem Flächensensor ausgelesen oder detektiert werden soll, aus Elementen bestehen muss, die die Eigenschaften von Fingerkuppen nachbilden und die einzeln und für sich genommen ebenfalls vom Flächensensor detektierbar sind.

Insofern betrifft die Erfindung in einem weiteren Aspekt die Verwendung des kartenähnlichen Objekts zur Erzeugung eines zeitabhängigen Signals auf einem kapazitiven Flächensensor durch eine Relativbewegung zwischen dem Eingabemittel und dem kartenähnlichen Objekt. Die oben genannten Vorteile und überraschenden technischen Wirkungen des Verfahrens zur Erzeugung des zeitabhängigen Signals und des Identifikationsverfahrens gelten auch für das kartenähnliche Objekt und seine Verwendung. Analog gelten die Vorteile und überraschenden technischen Wirkungen des kartenähnlichen Objekts und seiner Verwendung auch für das Identifikationsverfahren und das Signalerzeugungsverfahren. Dies gilt insbesondere für die bevorzugte Ausführungsform der Erfindung, wonach die Erzeugung des zeitabhängigen Signals auf dem kapazitiven Flächensensor die Bereitstellung eines ersten Kontakts und eines zweiten Kontakts umfasst, wobei ein erster Kontakt zwischen dem kartenähnlichen Objekt und dem kapazitiven Flächensensor besteht und ein zweiter Kontakt zwischen dem kartenähnlichen Objekt und dem Eingabemittel, wobei der erste Kontakt und der zweite Kontakt gleichzeitig bestehen und mindestens der zweite Kontakt dynamisch ausgebildet ist.

Insofern unterscheidet sich die vorliegende Erfindung von konventionellen Datenträgern, bei denen den Einzelelementen Informationen entnommen werden können, bevorzugt dadurch, dass im Kontext der vorliegenden Erfindung ein zeitabhängiges Signal durch die Bewegung eines Eingabemittels in Bezug auf ein kartenähnliches Objekt erzeugt wird, wobei das zeitabhängige Signal durch den Flächensensor detektiert und ausgewertet werden kann. Im Vergleich dazu werden im Stand der Technik Systeme beschrieben, bei denen eine Bewegung zwischen Datenträger und einem Lesegerät erfolgt.

Erfindungsgemäß sind die Einzelelemente der elektrisch leitfähigen Struktur eines kartenähnlichen Objekts hinsichtlich Größe, Abstand und Form so ausgebildet sind, dass ein aus einer Relativbewegung zwischen einem Eingabemittel und dem kartenähnlichen Objekt resultierende zeitabhängige Signal auf einem kapazitiven Flächensensor gegenüber einer Referenz-Eingabe mit dem Eingabemittel, die ohne Verwendung des kartenähnlichen Objekts erfolgt, verändert ist.

Es ist im Sinne der Erfindung insbesondere bevorzugt, dass die Einzelelemente der elektrisch leitfähigen Struktur hinsichtlich Größe, Abstand und Form so dimensioniert sind, dass zu jedem Zeitpunkt der Relativbewegung mindestens zwei Einzelelemente mindestens teilweise mit dem Eingabemittel in Wirkkontakt stehen. Das Eingabemittel kann beispielsweise ein Finger oder ein leitfähiges Objekt sein. Dabei können die mindestens zwei Einzelelemente hinsichtlich der gedachten Zentrallinie der elektrisch leitfähigen Struktur gleich oder unterschiedlich ausgerichtet sein, wobei unterschiedliche Ausrichtungen der Einzelelemente bevorzugt zu unterschiedlichen Verzerrungswirkungen auf das zeitabhängige Signal führen, während gleiche Ausrichtungen bevorzugt zu im Wesentlichen gleichen Verzerrungswirkungen führen. Bei unterschiedlichen Verzerrungswirkungen können sich diese überlagern, so dass das erzeugte Signal vorzugsweise die räumliche Struktur der elektrisch leitfähigen Struktur, insbesondere die Anordnung der Einzelelemente auf dem flächig ausgebildeten kartenähnlichen Objekt, widerspiegelt.

In einer weiteren bevorzugten Ausgestaltung der Erfindung sind die Einzelelemente der elektrisch leitfähigen Struktur hinsichtlich Größe, Abstand und Form so dimensioniert, dass zu jedem Zeitpunkt der Relativbewegung maximal ein Einzelelement mit einem Finger oder einem leitfähigen Objekt in Wirkkontakt stehen. Durch die vergrößerten Abstände zwischen den Einzelelementen wird das erzeugte zeitabhängige Signal vorzugsweise wieder zur Nullposition zurückgeführt. Diese Art der Anordnung ermöglicht bei der Auswertung des Signals eine besonders einfache und eindeutige Erkennung der Relativbewegung durch das Eingabemittel und damit vorzugsweise eine genauere Bestimmung des Signalverlaufs. Ein weiterer Vorteil dieser Ausführungsform ist die Vermeidung von Überlagerungen der Verzerrungswirkungen durch mehrere Einzelelemente und die daraus resultierende Eindeutigkeit bei der Auswertung des Signals im elektronischen Gerät, welches den Flächensensor beinhaltet.

Es ist darüber hinaus bevorzugt, dass die Eingabe mit einem Eingabemittel, beispielsweise mit einem oder mehreren Fingern oder einem elektrisch leitfähigen Objekt erfolgt, vorzugsweise in einer Bewegung relativ zum kartenähnlichen Objekt erfolgt, während das kartenähnliche Objekt relativ zum kapazitiven Flächensensor nicht bewegt wird. Für andere Anwendungen kann es bevorzugt sein, dass die Eingabe mit einem Eingabemittel, zum Beispiel mit einem oder mehreren Fingern oder einem elektrisch leitfähigen Objekt in einer Bewegung relativ zum kartenähnlichen Objekt erfolgt, während der Finger relativ zum kapazitiven Flächensensor nicht bewegt wird und das kartenähnliche Objekt zwischen Eingabemittel und kapazitivem Flächensensor bewegt wird.

Das zeitabhängige Signal kann vorzugsweise durch die x- und y-Koordinate, sowie durch Zeitstempel-Informationen beschrieben werden. Der räumliche Verlauf des zeitabhängigen Signals kann beispielsweise wellenartig, fortlaufend, entlang einer Linie und/oder auf und ab verlaufend sein, ohne darauf beschränkt zu sein. Dabei ist es bevorzugt, dass der räumliche Verlauf im Wesentlichen der Struktur und/oder Anordnung der Einzelelemente folgt. Wenn die elektrisch leitfähige Struktur aus rechteckigen streifenförmigen Einzelelementen besteht, die im Wesentlichen parallel nebeneinander angeordnet vorliegen, beispielsweise wie ein Zebrastreifen, so bilden die kürzeren Seiten der Streifen eine von den Lücken zwischen den Streifen unterbrochene Außenlinie der elektrisch leitfähigen Struktur. Diese kann, wie bei einem Zebrastreifen, eine gerade Linie sein, wenn alle Einzelelemente die gleiche Anfangsposition und/oder Endposition haben. Wenn alle Einzelelemente auch dieselbe Länge aufweisen, ergibt sich vorzugsweise eine rechteckige elektrisch leitfähige Struktur mit im Wesentlichen parallelen Außenlinien.

Wenn die rechteckigen Streifen, die die Einzelelemente bilden, keine gleiche Anfangs- und Endposition und/oder unterschiedliche Längen aufweisen, können die Außenlinien beispielsweise gewellt ausgestaltet sein. Es ist im Sinne der Erfindung bevorzugt, dass das erzeugte zeitabhängige Signal insbesondere den Verlauf dieser Außenlinien, beziehungsweise deren Überlagerung widerspiegelt, wobei der räumliche Verlauf des zeitabhängigen Signals beispielsweise auf einem Display des Flächensensors sichtbar gemacht werden kann. Es kann für einige Anwendungen der Erfindung bevorzugt sein, dass der Verlauf des zeitabhängigen Signals abschnittsweise nicht abgelenkt ist und der Bewegung des Eingabemittels auf dem kartenähnlichen Objekt folgt. Solche Anwendungen sind beispielweise kartenähnliche Objekte, die mehrere Bereiche der elektrisch leitfähigen Struktur aufweisen. Jeder Bereich ist beispielsweise einer anderen Aktion auf dem elektronischen Gerät zugeordnet. Es ist bevorzugt, dass das zeitabhängige Signal zur eindeutigen Erkennung der einzelnen Bereiche zwischen den einzelnen Bereichen abschnittsweise nicht abgelenkt ist. Durch solche Abschnitte ohne Unterbrechung kann vorteilhafterweise auch die absolute Position des jeweiligen Abschnittes auf dem kartenähnlichen Objekt bestimmt werden.

Es ist im Sinne der Erfindung insbesondere bevorzugt, dass die gleichzeitigen Wirkkontakte zwischen Eingabemittel und kartenähnlichen Objekt und kartenähnlichen Objekt und Flächensensor kapazitiv ausgebildet sind. Es kann auch bevorzugt sein, dass der Wirkkontakt zwischen Eingabemittel und kartenähnlichem Objekt eine galvanische Verbindung darstellt. Ein kapazitiver Wirkkontakt hat den Vorteil, dass es zwischen Eingabemittel und der elektrisch leitfähigen Struktur keine galvanische Verbindung geben muss, das heißt die elektrisch leitfähige Struktur kann zum Beispiel mittels eines Lacks, einer Farbschicht, einer überdruckten Grafik, eines Labels beziehungsweise Aufklebers und/oder einer anderen weiteren Schicht abgedeckt sein. Damit ist es möglich, die elektrisch leitfähige Schicht optisch abzudecken und die Oberfläche der des kartenähnlichen Objekts unabhängig von der leitfähigen Struktur ansprechend zu gestalten. Darüber hinaus kann die elektrisch leitfähige Schicht vorteilhafterweise vor mechanischem Abrieb geschützt werden und eine zuverlässigere Funktion bei längerer Benutzung gewährleistet werden. Dies stellt einen deutlichen Vorteil gegenüber dem Stand der Technik dar, da die elektrisch leitfähige Struktur als Identifikationsmerkmal des jeweiligen kartenförmigen Objektes bevorzugt vollständig optisch und haptisch versteckt werden kann. Im Stand der Technik sind zum Beispiels Barcodes bekannt, die optisch mittels Kamera oder Fotosensor ausgelesen werden und deshalb prinzipbedingt sichtbar sind und das äußere Erscheinungsbild eines Produktes stören können. Darüber hinaus sind im Stand der Technik RFID-Tags bekannt, die im Wesentlichen aus einer Antenne, sowie einem applizierten Chip bestehen. Diese Tags können auch in dünnere und/oder flexible Materialien integriert werden, jedoch ist häufig der Chip spürbar, da er eine gewissen Mindestdicke aufweist.

Darüber hinaus kann die elektrisch leitfähige Struktur mittels Folientransferverfahren, zum Beispiel Kaltfolientransfer, Heißprägen und/oder Thermotransfer auf ein vorzugsweise flexibles Substratmaterial des kartenähnlichen Objekts aufgetragen werden, ohne auf diese Aufbringungsverfahren beschränkt zu sein. Insbesondere können zur Herstellung des kartenähnlichen Objektes Druckverfahren, wie zum Beispiel Offsetdruck, Tiefdruck, Flexodruck und/oder Siebdruck verwendet werden und/oder Inkjetmethoden mittels elektrisch leitfähiger Farben, die beispielsweise auf Metallpartikeln, Nanopartikeln, Kohlenstoff, Graphen und/oder elektrisch leitfähigen Polymeren basieren, ohne auf diese Druckverfahren und/oder Materialien beschränkt zu sein. Es kann im Sinne der Erfindung auch bevorzugt sein, die elektrisch leitfähige Struktur durch mindestens eine weitere Schicht abzudecken, wobei diese Schicht ein papier- oder folienbasiertes Laminatmaterial oder mindestens eine Lack-/Farbschicht sein kann. Diese Schicht kann optisch transparent oder opak ausgebildet sein.

Es war völlig überraschend, dass sich die elektrisch leitfähige Struktur aufgrund ihrer bevorzugten Struktur aus im Wesentlichen ähnlichen Einzelelementen besonders einfach individualisieren lässt.

Ein Merkmal klassischer konventioneller Druckverfahren ist die einfache und schnelle Vervielfältigung eines Motivs, indem das zu druckende Motiv auf eine Druckform, zum Beispiel Tiefdruckzylinder oder Offsetdruckplatte, aufgebracht wird und anschließend mehrfach und mit hoher Geschwindigkeit vervielfältigt werden kann. Konventionelle Druckverfahren sind nicht dafür geeignet, individualisierte Inhalte herzustellen, da die Druckformherstellung einen signifikanten Anteil an den Gesamtherstellungskosten darstellt. Somit können nur größere Auflagen eines Druckprodukts wirtschaftlich hergestellt werden. Im grafischen Druck existieren für die Herstellung kleiner Auflagen sowie individualisierter Produkte Digitaldruckverfahren, mit denen individuelle Inhalte wirtschaftlich gedruckt werden können. Diese Druckverfahren umfassen beispielsweise Elektrofotografie, Laserdruck oder Inkjetdruck. Zum aktuellen Zeitpunkt ist es nicht möglich, elektrisch leitfähige Elemente mit solchen Digitaldruckverfahren wirtschaftlich herzustellen. Es ist jedoch möglich, mittels Verfahrenskombinationen von konventionellen Druckverfahren und additiven oder subtraktiven Verfahren individualisierte elektrische leitfähige Strukturen herzustellen. Im Folgenden werden zwei mögliche Herstellungsabläufe skizziert.

Laserablation:

Im ersten Schritt wird mittels elektrischer leitfähiger Farbe oder durch Folientransferverfahren eine elektrisch leitfähige Grundstruktur auf ein beispielsweise flexibles Substrat aufgetragen. Die Grundstruktur besteht beispielsweise aus gleichförmigen äquidistanten Einzelelementen, zum Beispiel Rechtecken. In einem zweiten Prozessschritt werden die elektrisch leitfähigen Einzelelemente an bestimmten Stellen mittels Laserablation galvanisch voneinander getrennt, das heißt an diesen Stellen wird das elektrisch leitfähige Material selektiv abgetragen. Damit können einzigartige, d.h. individualisierte, Strukturen effizient hergestellt werden. Ein überraschender Vorteil dieses Herstellungsverfahren ist die gute optische Versteckbarkeit der elektrisch leitfähigen Struktur. Auch nach Überdrucken oder Abdecken der elektrisch leitfähigen Struktur mittels Laminat oder Label kann bei Gegenlicht gegebenenfalls die elektrisch leitfähige Struktur für das menschliche Auge sichtbar sein. Ist die Struktur über die gesamte Fläche verteilt und nur an bestimmten Stellen durch einen dünnen Laserschnitt getrennt, ist diese Struktur wesentlich schwieriger mit dem bloßen Auge zu erkennen.

Demgemäß betrifft die Erfindung in einer weiteren bevorzugten Ausgestaltung ein kartenähnliches Objekt, wobei die elektrisch leitfähige Struktur in einem mehrstufigen Prozess umfassend folgende Schritte hergestellt wird:

a) Applikation einer elektrisch leitfähigen Grundstruktur mittels Folientransferverfahren oder elektrisch leitfähiger Farbe auf ein Substrat,
b) Selektive Entfernung von Teilen der elektrisch leitfähigen Grundstruktur mittels Laser, wodurch eine elektrisch leitfähige Struktur mit Einzelelementen erhalten wird, die räumlich voneinander getrennte Bereiche aufweisen.

In einer weiteren bevorzugten Ausführungsform betrifft die Erfindung ein kartenähnliches Objekt, wobei die elektrisch leitfähige Struktur in einem mehrstufigen Prozess hergestellt werden kann, wobei der mehrstufige Prozess bevorzugt folgende Schritte umfasst:

a) Bereitstellung eines elektrisch leitfähigen Substratmaterials, zum Beispiel Metallfolien oder Metallplatten, metallisiertes Papier und/oder aluminiumbeschichtete Folie,
b) Selektive Entfernung von Teilen der elektrisch leitfähigen Beschichtung mittels Laser, wodurch eine elektrisch leitfähige Struktur mit Einzelelementen erhalten wird, die räumlich voneinander getrennte Bereiche aufweisen.

Der Begriff "mittels Laser" bedeutet im Sinne der Erfindung bevorzugt, dass Laserstrahlung verwendet wird, um an ausgewählten Stellen der zuvor applizierten elektrisch leitfähigen Grundstruktur elektrisch leitfähiges Material abzutragen. Dadurch bilden sich in den zuvor durchgehend elektrisch leitfähig ausgebildeten Einzelelementen der Grundstruktur Unterbrechungen aus, die vorteilhafterweise eine galvanische Verbindung zwischen zwei Unterbereichen eines Einzelelements unterbrechen, wodurch beispielsweise die Länge eines Einzelelementes eingestellt werden kann. Dadurch kann eine elektrisch leitfähige Struktur mit Einzelelementen erzeugt werden, wobei die Einzelelemente der elektrisch leitfähigen Struktur räumlich voneinander getrennte Bereiche aufweisen. Vorteilhafterweise kann dadurch auch der Bereich eines Einzelelements eingestellt werden, der im Falle einer Relativbewegung zwischen Eingabemittel und kartenähnlichem Objekt vom Flächensensor detektiert werden kann. Es ist im Sinne der Erfindung bevorzugt, dass das Substrat flexibel ausgebildet ist. Es kann sich beispielsweise um eine Plastik-, Karton- und/oder Papierkarte, die so dünn ausgebildet ist, dass sie biegsam ist und besonders einfach innerhalb einer Druckmaschine verarbeitet, d.h. bedruckt werden kann. Es ist insbesondere bevorzugt, dass eine solche Karte in einem bevorzugten Größenordnungsbereich einer Visiten- oder Checkkarte liegt.

Inkjetdruck:

Eine weitere Möglichkeit zur nachträglichen Individualisierung der elektrisch leitfähigen Struktur ist die nachträgliche Applikation von elektrisch leitfähigen Brücken. Im ersten Schritt wird mittels elektrischer leitfähiger Farbe oder durch Folientransferverfahren eine elektrisch leitfähige Grundstruktur auf ein beispielsweise flexibles Substrat aufgetragen. Die Grundstruktur besteht bevorzugt aus äquidistanten Einzelelementen, zum Beispiel Rechtecken, die an bestimmten Stellen Unterbrechungen aufweisen. In einem zweiten Prozessschritt werden diese Unterbrechungen selektiv mittels elektrisch leitfähiger Farbe bedruckt und somit miteinander verbunden. Auch mit diesem Prozess können einzigartige, d.h. individualisierte, elektrisch leitfähige Strukturen effizient hergestellt werden.

Demgemäß betrifft die Erfindung in einer weiteren bevorzugten Ausgestaltung ein kartenähnliches Objekt, wobei die elektrisch leitfähige Struktur in einem mehrstufigen Prozess umfassend folgende Schritte hergestellt wird:

a) Applikation einer elektrisch leitfähigen Grundstruktur mittels Folientransferverfahren oder elektrisch leitfähiger Farbe auf ein Substrat,
b) Selektive Applikation von elektrisch leitfähigen Brücken und/oder zusätzlichen elektrisch leitfähigen Elementen mittels Inkjetdruck, mit dem elektrisch leitfähige Farbe auf das kartenähnliche Objekt aufgebracht wird, wodurch eine elektrisch leitfähige Struktur mit Einzelelementen erhalten wird.

Der Begriff "Substrat" wird in dieser bevorzugten Ausführungsform der Erfindung bevorzugt so verstanden, wie in der zuvor beschriebenen Ausgestaltung der Erfindung. In der vorliegenden Ausführungsform der Erfindung ist es insbesondere bevorzugt, dass die elektrisch leitfähige Grundstruktur Einzelelemente umfasst, die Unterbrechungen aufweisen. Diese Unterbrechungen sind im Sinne der Erfindung bevorzugt Lücken innerhalb eines Einzelelements, wobei jedes Einzelelement bevorzugt eine oder mehrere Unterbrechungen aufweist. Es ist insbesondere bevorzugt, dass diese Unterbrechungen eine galvanische Verbindung innerhalb des jeweiligen Einzelelements unterbrechen. Eine elektrisch leitfähige Brücke ist im Sinne der Erfindung bevorzugt elektrisch leitfähiges Objekt, das eine Unterbrechung überwindet in dem Sinne, dass es eine elektrische Verbindung zwischen den zuvor durch eine Unterbrechung getrennten Bereichen eines Einzelelementes herstellt. Eine solche elektrisch leitfähige Brücke wird dadurch erzeugt, dass elektrisch leitfähige Farbe mittels Inkjetdruck auf das kartenähnliche Objekt aufgebracht wird, wodurch vorteilhafterweise eine elektrisch leitfähige Struktur mit Einzelelementen erhalten wird, bei der Unterbrechungen der zuvor applizierten Grundstruktur durch die Brücken überwunden werden und eine zuvor nicht bestehende Verbindung zwischen zwei Unterbereichen eines Einzelelementes hergestellt werden kann. Die neu geschaffene Verbindung kann sowohl kapazitiv als auch galvanisch ausgeprägt sein. Es kann im Sinne der Erfindung ebenfalls bevorzugt sein, dass elektrisch leitfähige Brücken und/oder zusätzliche elektrisch leitfähige Elemente mit Hilfe anderer Applikatoren auf das kartenähnliche Objekt aufgebracht werden.

In einer weiteren Ausführungsform umfasst die elektrisch leitfähige Grundstruktur Einzelelemente. Es ist bevorzugt, dass diese Einzelelemente mittels Inkjetdruck in eine oder beide Richtungen verlängert werden, indem zusätzliches elektrisch leitfähiges Material angrenzend und mindestens 0,2 mm mit dem jeweiligen Einzelelement überlappend gedruckt wird. Durch die Applikation solcher zusätzlichen elektrisch leitfähigen Elemente kann die elektrisch leitfähige Grundstruktur besonders unkompliziert verändert werden.

Es ist im Sinne der Erfindung bevorzugt, die nachträgliche Bearbeitung von zunächst erzeugten elektrisch leitfähigen Grundstrukturen als "Individualisieren" zu bezeichnen. Damit ist vorzugsweise gemeint, dass kartenähnliche Objekte erzeugt werden können, die jeweils eine unterschiedliche elektrisch leitfähige Struktur aufweisen, wobei dieser Unterschied vorzugsweise von einem Flächensensor erkannt werden kann, so dass den unterschiedlichen kartenähnlichen Objekten beispielsweise unterschiedliche Daten(sätze) und/oder Aktionen in einem elektronischen Gerät, das einen Flächensensor aufweist, zugeordnet werden können. Es war vollkommen überraschend, dass durch diese Nachbearbeitungsprozesse das besonders schnelle, kostengünstige und einfache Individualisieren von kartenähnlichen Objekten ermöglicht wird, das zuvor in einem wirtschaftlichen Verfahren nicht möglich war.

In einem weiteren Aspekt betrifft die Erfindung ein System umfassend ein erfindungsgemäßes kartenähnliches Objekt und einen kapazitiven Flächensensor, wobei das kartenähnliche Objekt auf den kapazitiven Flächensensor auflegbar ist und das kartenähnliche Objekt dazu eingerichtet ist, ein zeitabhängiges Signal durch eine Relativbewegung zwischen einem Eingabemittel und dem kartenähnlichen Objekt zu erzeugen, wobei das zeitabhängige Signal durch eine Anordnung der Einzelelemente auf dem kartenähnlichen Objekt festlegbar ist. Die Definitionen, technische Wirkungen und Vorteile, die hinsichtlich des Verfahrens und hinsichtlich des kartenähnlichen Objekts beschrieben wurden, gelten analog für das System und umgekehrt. Es ist in dieser Ausführungsform der Erfindung insbesondere bevorzugt, dass die Einzelelemente der elektrisch leitfähigen Struktur hinsichtlich Größe, Abstand und Form so ausgebildet sind, dass das aus der Relativbewegung zwischen dem Eingabemittel und dem kartenähnlichen Objekt resultierendes zeitabhängiges Signal auf dem kapazitiven Flächensensor gegenüber einer Referenz-Eingabe mit dem Eingabemittel, die ohne Verwendung des kartenähnlichen Objekts erfolgt, verändert ist.

Es ist im Sinne der Erfindung besonders bevorzugt, dass das System durch einen ersten Kontakt und einen zweiten Kontakt charakterisiert wird, wobei der erste Kontakt zwischen dem kartenähnlichen Objekt und dem kapazitiven Flächensensor besteht und der zweite Kontakt zwischen dem kartenähnlichen Objekt und einem Eingabemittel, wobei mindestens der zweite Kontakt dynamisch ausgebildet ist. Es ist im Sinne der Erfindung bevorzugt, dass die dynamische Ausbildung des zweiten Kontakts der Relativbewegung zwischen Eingabemittel und kartenähnlichen Objekt entspricht.

**Strukturierung der Einzelelemente durch Verändern der äußeren Form, beispielsweise Stanzen**

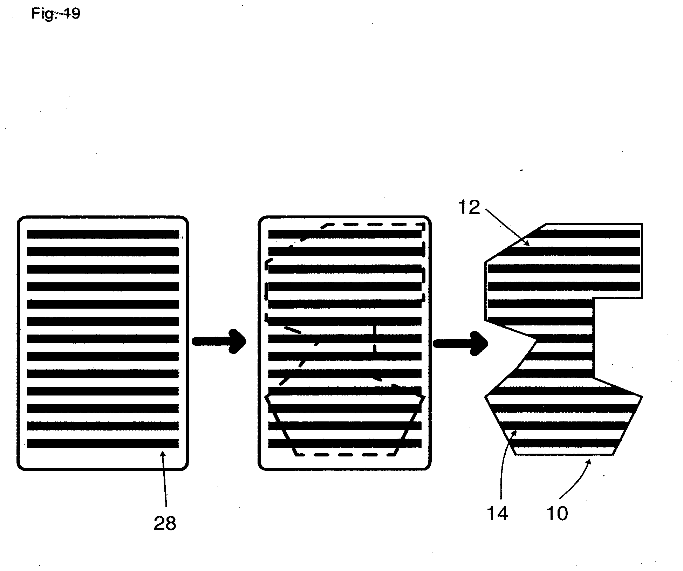

Durch die flexible Anordnung der Einzelelemente ergibt sich eine weitere Ausprägungsform der Erfindung bei der überraschenderweise die jeweils benötigte Größe, Abstand und Form der Einzelelemente besonders ökonomisch in bestehenden Produktionsverfahren alternativ oder ergänzend zum Druckprozess hergestellt werden kann. So ist es denkbar, eine bereits vorhandene elektrisch leitfähige Struktur oder Fläche mittels Stanzen, Schneiden, Laserschneiden und/oder Abreißen beispielsweise entlang einer definierten perforierten Linie, zu produzieren, so dass die Einzelelemente das erfindungsgemäße zeitabhängige Signal erzeugen können. Somit ist es auch möglich, bereits vorhandene leitfähige Materialien wie unter anderem metallisierte Folien oder Hologramme nachträglich und kostengünstig in die Einzelelemente dieser Erfindung zu strukturieren. Eine entsprechende Ausführungsform der Erfindung ist in Figur 19 dargestellt.

**Anordnung und Gestaltung der Einzelelemente als optisches Design oder zur Ermöglichung weiterer Funktionen, beispielsweise durch Kombination von Funktionen**

Ein besonderer Vorteil der Erfindung ergibt sich überraschenderweise aus der äußerst flexiblen Größe, Abstand und Form der Einzelelemente. So können diese elektrisch leitfähigen Einzelelemente auch für den Nutzer sichtbar vorliegen und beispielsweise in Form bestimmter Symbole, Zeichen oder Designs angeordnet werden. Eine mögliche Anwendung kann zum Beispiel ein aus leitfähigen Einzelelementen bestehendes Firmenlogo auf Marketingmaterial sein und/oder ein Sicherheitsmerkmal, wie z.B. ein Hologramm, aufgebaut aus erfindungsgemäßen Einzelelementen, auf einer Banknote. Insbesondere für sicherheitsrelevante Anwendungen lassen sich verfügbare Materialien für Hologramme, die beispielweise aus elektrisch leitfähigem Aluminium im Folientransferverfahren appliziert werden, zur Herstellung der erfindungsgemäßen Einzelelemente nutzen. Als großer Vorteil erweist sich hier, dass das entstehende Signal kapazitiv erkannt wird und kein direkter galvanischer Kontakt nötig ist. So lassen sich überraschenderweise auch Materialien verwenden, die, wie beispielsweise bei Hologrammen, zum Schutz vor mechanischem Abrieb mittels Folien oder Lacken abgedeckt werden. Weiterhin können die Einzelelemente auch gemäß anderer elektronischer Funktionalitäten angeordnet werden und so beispielsweise als Antenne oder Leiterbahnen ausgeprägt sein.

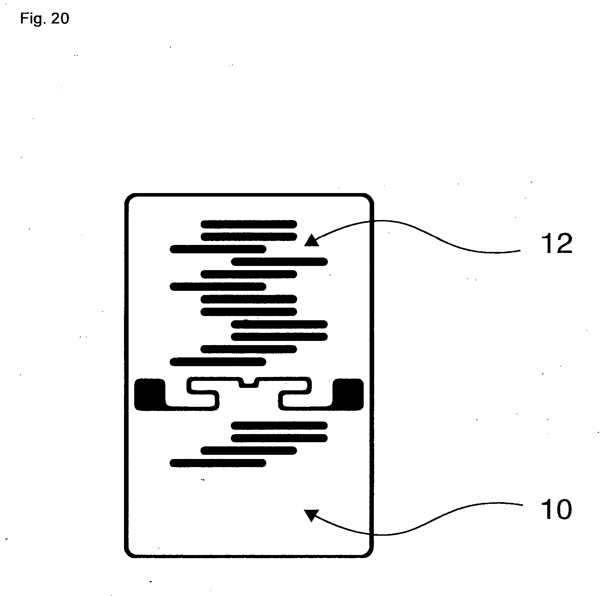

Im Sinne dieser Erfindung war es völlig überraschend, dass dadurch in der Produktion zahlreiche Effizienzsteigerungen und Kosteneinsparungen möglich werden, indem die Einzelelemente zur Erzeugung des erfindungsgemäßen zeitabhängigen Signals gleichzeitig auch andere Funktionen erfüllen können. Im Umkehrschluss kann es im Sinne der Erfindung auch bevorzugt sein, vorhandene Hologramme oder andere Sicherheitselemente einzeln oder in Kombination mit einer zusätzlich aufgebrachten elektrisch leitfähigen Struktur kapazitiv auszuwerten oder nachträglich so zu verändern, beispielsweise mittels Laser oder Inkjet, dass sie ein spezifisches resultierendes Signal auf dem Flächensensor erzeugen, welches ausgewertet werden kann. Im Stand der Technik sind bisher nur isolierte Funktionen mittels leitfähigen Strukturen bekannt, nicht jedoch wie hier eine solche Kombination von günstigen Eigenschaften. Eine mögliche Anwendung kann zum Beispiel eine Kombination aus einem RFID- oder NFC-Tag und dieser Vorrichtung in einer Plastikkarte sein, wobei das RFID-/NFC-Tag vorzugsweise zur Identifikation dient und die Vorrichtung bevorzugt eine zusätzliche Interaktionserkennung auf einem kapazitiven Flächensensor, beispielsweise einem Tablet, ermöglicht. Eine entsprechende Ausführungsform der Erfindung ist in Figur 20 dargestellt.

**Kombination von Materialien mit unterschiedlichen elektrischen Eigenschaften**

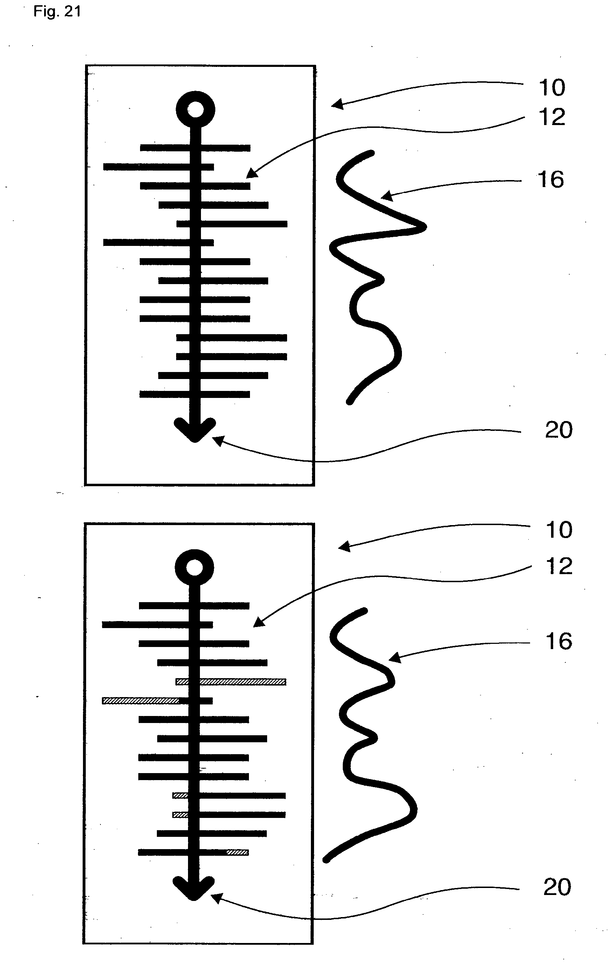

Ein weiterer überraschender Vorteil der Erfindung ergibt sich durch die Kombination von unterschiedlich leitfähigen Materialien. Erzeugt man eine oder mehrere der einzelnen leitfähigen Elemente eines kartenähnlichen Objekts vollständig, teilweise und/oder gemischt aus Materialien mit unterschiedlich elektrischen Eigenschaften, so resultiert dies in einer unterschiedlich starken Modulation des zeitabhängigen Signals verglichen mit solchen leitfähigen Einzelelementen, die alle aus dem gleichen leitfähigem Material hergestellt wurden. Insbesondere für sicherheitsrelevante Anwendungen, wie beispielsweise Banknoten, Ausweisdokumente, Bezahlfunktionen und/oder Identifikationsfunktionen, ist dies von großem Vorteil, da aus der sichtbaren elektrisch leitfähigen Struktur nicht mehr auf die Modulation des zeitabhängigen Signals geschlossen werden kann. Figur 21 zeigt im Vergleich zwei optisch gleiche leitfähige Strukturen und deren Signalverlauf, wobei in einer Struktur manche Einzelelemente ganz oder teilweise aus einem Material mit anderen elektrischen Eigenschaften hergestellt wurden.

**Leitfähige Strukturen als nicht funktionelle Verwirrmuster**

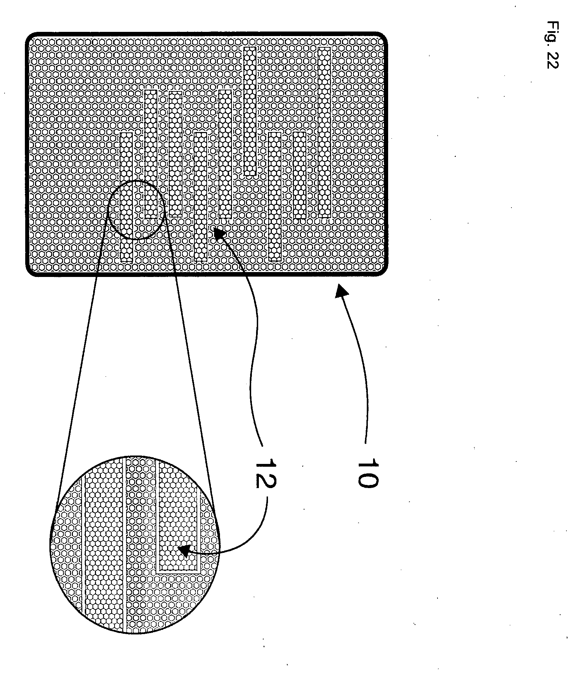

Figur 22 zeigt ein kartenähnliches Objekt mit elektrisch leitfähiger Struktur, bei dem, galvanisch getrennt von der ersten Struktur, zusätzlich eine weitere leitfähige Struktur als optisches Verwirrmuster aufgebracht ist. Es erweist sich als überraschender erfindungsgemäßer Vorteil, dass die leitfähigen Einzelelemente sowie eine optische Verwirrstruktur aus dem gleichen Material bestehen können ohne die Funktionalität zu beeinflussen. Da die tatsächliche Struktur der Erfindung so optisch schwerer zu identifizieren ist, kann eine mögliche Anwendung zum Beispiel im Bereich Banknoten und/oder Identifikationskarten und/oder Kopierschutz liegen.

### Individuelle Bewegungspfade zur Erzeugung verschiedener Signale bei gleicher leitfähiger Struktur

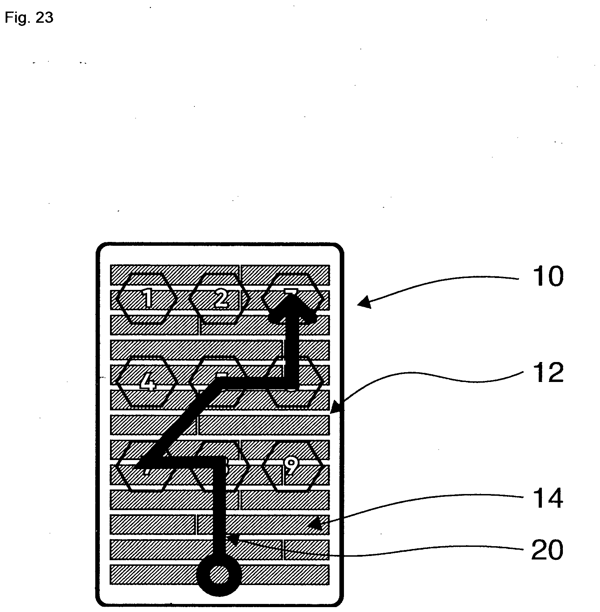

Figur 23 zeigt ein kartenähnliches Objekt, auf dem eine elektrisch leitfähige Struktur angeordnet ist, die Markierungen für einen möglichen Bedienpfad aufweist. Die Eingabe erfolgt bevorzugt durch eine Relativbewegung des Eingabemittels zwischen zwei oder mehreren dieser Markierungen. Dabei wird je nach vom Benutzer gewählten Bedienpfad ein anderes zeitabhängiges Signal erzeugt. Eine mögliche Anwendung kann zum Beispiel die Eingabe eines Passworts über ein Trägermedium wie eine Ausweiskarte und/oder Bezahlkarte anhand einer individuell gewählten Geste sein. Hierbei war es im Sinne der Erfindung besonders überraschend, dass solch eine Geste, wie sie beispielsweise zum Entsperren von Smartphones bekannt ist, in Kombination mit einem sehr günstig umsetzbaren kartenförmigen Objekt im Sinne einer Zwei-Faktor-Authentifizierung beispielsweise als zusätzlicher individueller Schlüssel dienen kann.

### Einzelelemente um ein Objekt herum anordnen:

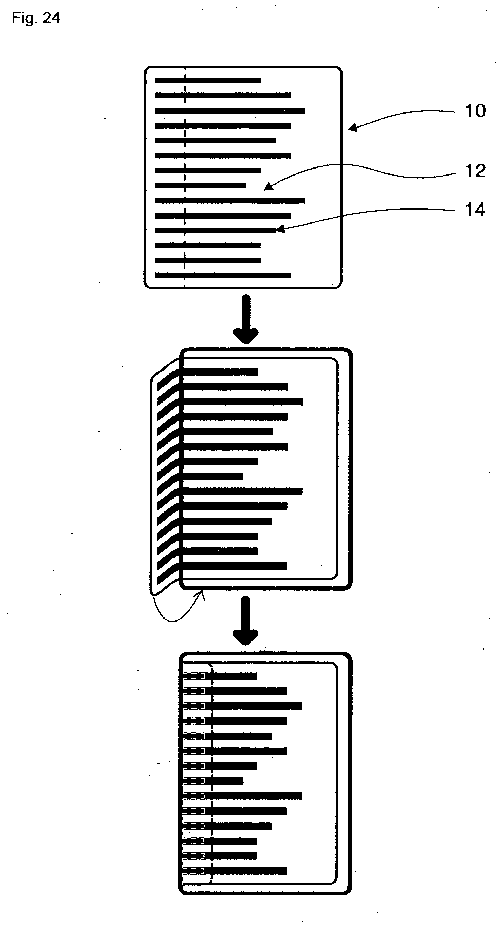

Figur 24 zeigt ein kartenähnliches Objekt mit elektrisch leitfähiger Struktur, das zumindest teilweise um ein anderes Objekt herumgewickelt wurde. Dabei wurde die elektrisch leitfähige Struktur so gestaltet, dass der erste Wirkkontakt und der zweite Wirkkontakt jeweils auf zwei unterschiedlichen Seiten beziehungsweise Ebenen des umwickelten Objekts stattfindet. Eine mögliche Anwendung kann zum Beispiel die Erkennung von Ausweisdokumenten und/oder besonders dicken Substraten und/oder Verpackungen mittels nachträglich aufgebrachtem Identifikationslabel sein.

### Erzeugung der leitfähigen Strukturen mittels eines Stifts mit elektrisch leitfähiger Farbe

Als Materialien kommen elektrisch leitfähige Tinten in Frage, die mittels Stift appliziert werden, z.B. auf Basis von Kohlenstoff, Graphit, CNTs, elektrisch leitfähigen Polymeren, Metallpartikeln oder anderen Materialien, die zur Applikation eines elektrisch leitfähigen Films geeignet sind.

### Einfachere Bestimmung des Signalverlaufs

In einer weiterhin bevorzugten Ausgestaltung der Erfindung sind die Einzelelemente der elektrisch leitfähigen Struktur am Anfang und am Ende der Relativbewegung spezifisch hinsichtlich Größe, Abstand und Form ausgestaltet. Durch die spezielle Ausgestaltung ergibt sich ein definiertes Signal am Anfang und Ende des Signalverlaufs und damit eine einfachere Bestimmung des Signalverlaufs bei der Auswertung des Signals. Ebenso können diese spezifisch gestalteten Einzelelemente periodisch wiederholt werden, um auf diese Weise ein Taktsignal zu erhalten, das wiederum die Auswertung des Signals vereinfacht. Ein mögliches Ausführungsbeispiel weist breitere Einzelelemente am Anfang und/oder am Ende der elektrisch leitfähigen Struktur auf. Dies bedeutet im Sinne der Erfindung bevorzugt, dass die Einzelelemente am Anfang und/oder am Ender der elektrisch leitfähigen Struktur breiter ausgebildet sind als die Einzelelemente der elektrisch leitfähigen Struktur, die in der Mitte der elektrisch leitfähigen Struktur angeordnet vorliegen.

### Flexible Anordnung der Einzelelemente

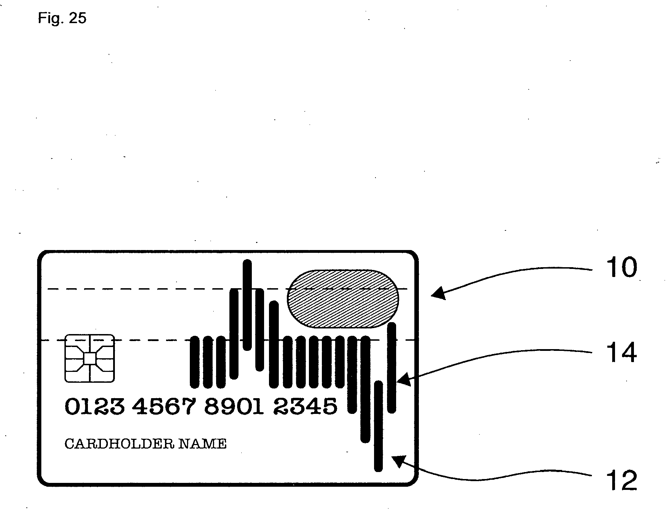

Figur 25 zeigt einen mehrschichtigen Kartenaufbau in Form einer Plastikkarte, bei dem die leitfähige Struktur innerhalb der Karte angeordnet vorliegt. Durch die Flexibilität in der Anordnung der Einzelelemente, ist es insbesondere überraschend möglich, die Einzelelemente um andere elektronische oder elektrisch leitfähige Bauteile herum anzuordnen, so dass diese keinen störenden Einfluss ausüben können. Dadurch ergibt sich zum Beispiel eine mögliche Anwendung in der Codierung einer Kreditkarten- und/oder Prüfnummer und/oder ergänzender Passwörter für Ausweisdokumente. Figur 25 zeigt eine Kreditkarte, bei der die Einzelelemente zwischen dem Chip und beispielsweise dem Hologramm der Kreditkarte angeordnet wurden.

### Eingabemittel als Teil des Flächensensors

In einem weiteren Aspekt betrifft die Erfindung die Verwendung des kartenähnlichen Objekts zur Erzeugung eines zeitabhängigen Signals auf einem kapazitiven Flächensensor durch eine Relativbewegung zwischen dem kartenähnlichen Objekt und dem kapazitiven Flächensensor, wobei das Eingabemittel eine feste Position relativ zum kapazitiven Flächensensor beibehält und/oder das Eingabemittel Teil des Flächensensors ist.

**Verwendung von besonders dünnen Substraten**

In einer Ausführungsform der Erfindung umfassend besonders dünne Substrate war es besonders überraschend, dass durch den Kontakt der drei Elemente 1) kartenähnliches Objekt, 2) Flächensensor und 3) Eingabemittel auch dünne Substrate für das kartenähnliche Objekt verwendet werden können. Diese können vorzugsweise spezielle geringe Grammaturen aufweisen und besonders dünn ausgebildet sein.

Im Stand der Technik sind nur statische Eingabemuster bekannt, die einen Fußabdruck zu einem bestimmten Zeitpunkt erzeugen. Daher ist es bei Vorrichtungen und Systemen aus dem Stand der Technik zwingend notwendig, dass das statische Eingabemuster sich jederzeit vollständig in Kontakt mit dem Flächensensor befindet. Da die erfindungsgemäße Relativbewegung des Eingabemittels die elektrisch leitfähige Struktur immer in Kontakt mit dem Flächensensor hält, wird diese deutliche Einschränkung im Stand der Technik gelöst und es können beliebige Substrate verwendet werden, unabhängig von Dicke, Biegung, Knicke, und/oder Knitter. Eine mögliche Anwendung für besonders dünne Substrate im Bereich 10 - 90 g/m$^2$ können zum Beispiel Banknoten, Dokumente, Labels, Zeitschriften, Bücher, Flaschenetiketten, dünne Folien und/oder abziehbare Etiketten sein. Der durchschnittliche Fachmann weiß, welche Dicken diese Produkte aufweisen.

Die Erfindung wird anhand der nachfolgenden Figuren näher beschrieben:

| | |
|---|---|
| Figuren 1 bis 3 | verschiedene bevorzugte Designvarianten für eine bevorzugte Ausführungsform der elektrisch leitfähigen Struktur |
| Figuren 4 bis 15 | Anwendungsmöglichkeiten von verschiedenen bevorzugten Ausführungsformen der Erfindung |
| Figur 16 | bevorzugte Ausführungsform der elektrisch leitfähigen Struktur |
| Figuren 17 und 18 | beispielhafte Verfahren zur Individualisierung eines kartenähnlichen Objekts |
| Figuren 19 bis 27 | weitere bevorzugte Ausführungsformen der Erfindung |

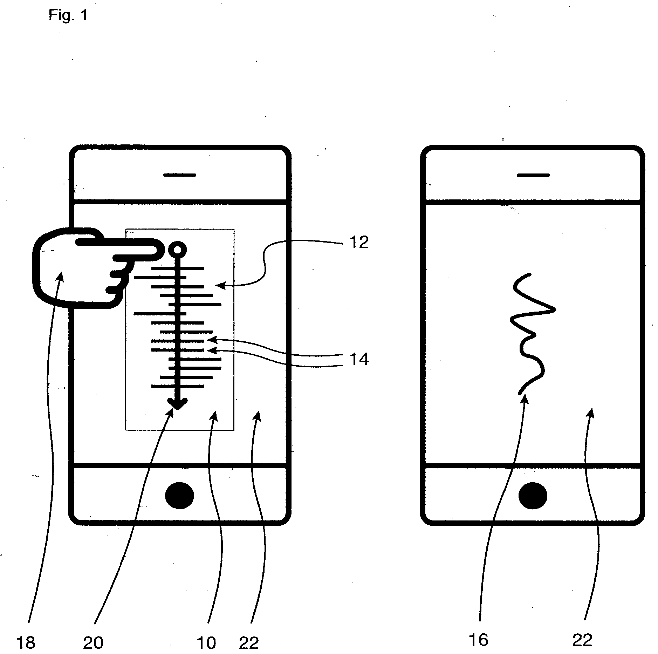

Die Figur 1 zeigt ein kartenähnliches Objekt (10), welches auf einem kapazitiven Flächensensor (22) aufliegt und eine elektrisch leitfähige Struktur (12) aufweist, die eine Vielzahl von Einzelelementen (14) umfasst. Durch eine Relativbewegung (20, dargestellt durch einen Pfeil) des Eingabemittels (18) auf dem kartenähnlichen Objekt (10) wird auf dem kapazitiven Flächensensor (22) ein zeitabhängiges Signal (16) erzeugt, wobei das zeitabhängige Signal (16) durch die Anordnung der Einzelelemente (14) festgelegt wird.

Die Figuren 1 bis 3 zeigen verschiedene Designvarianten für die elektrisch leitfähige Struktur (12) einer bevorzugten Ausführungsform des kartenähnlichen Objekts (10). Die in den Figuren 1 bis 3 dargestellten bevorzugten Ausführungsformen weisen jeweils streifenförmige, parallel zueinander angeordnete Einzelelemente (14) auf, die sich insbesondere hinsichtlich der Lage einer "Bedienspur" und der Varianz der Länge der Einzelelemente (14) unterscheiden. Der Begriff der "Bedienspur" bezeichnet im Sinne der Erfindung bevorzugt, den pfadförmigen Bereich der leitfähigen Struktur (12), der mit einem Eingabemittel (18) berührt werden soll, entweder durch eine Bewegung des kartenähnlichen Objekts (10) oder durch eine Bewegung eines Eingabemittels (18), wobei bevorzugt beide Bewegungsweisen eine Relativbewegung (20) des Eingabemittels (18) zum Objekt (10) bewirken. In den Figuren 1 bis 3 ist jeweils eine mögliche graphische Wiedergabe des räumlichen Verlaufs des zeitabhängigen Signals (16) dargestellt.

Figur 1 zeigt ein kartenähnliches Objekt (10) mit einer elektrisch leitfähigen Struktur (12), die durch gleich lange, äquidistante Einzelelemente (14) gekennzeichnet ist. Die vorgesehene "Bedienspur" für die Relativbewegung (20) zwischen Eingabemittel (18) und kartenähnlichem Objekt (10) liegt in der Mitte der elektrisch leitfähigen Struktur (12).

Das resultierende zeitabhängige Signal (16) entsteht in dieser bevorzugten Ausgestaltung der Erfindung vorzugsweise beidseitig der Bedienspur.

Bei dieser bevorzugten Ausführungsform der elektrisch leitfähigen Struktur (12) stellt der Verlauf des zeitlich veränderlichen Signals (16) eine Überlagerung der Signale dar, die sowohl auf die Bestandteile der Einzelelemente (14), die sowohl rechts, als auch links von der Bedienspur angeordnet vorliegen, zurückgehen. Dies vorzugsweise deswegen, weil die streifenförmigen Einzelelemente (14) keine gemeinsame Anfangs- und Endposition aufweisen und in Bezug auf die Bedienspur statistisch verteilt vorliegen. Dies bedeutet im Sinne der Erfindung bevorzugt, dass einige Einzelelemente (14) mit einem größeren Anteil auf der rechten Seite vorliegen und andere Einzelelemente (14) mit einem größeren Anteil auf der linken Seite der Bedienspur vorliegen. Das zeitabhängige Signal (16) setzt sich vorzugsweise aus den Gesamtsignalen aller Einzelelemente (14) zusammen, wobei jeweils die Lage und Position des gesamten Einzelelementes in Bezug auf die Bedienspur bei der Erzeugung des zeitabhängigen Signals (16) beziehungsweise bei der Auswertung dieses Signals (16) zur Identifikation eines kartenähnlichen Objekts (10) berücksichtigt wird.

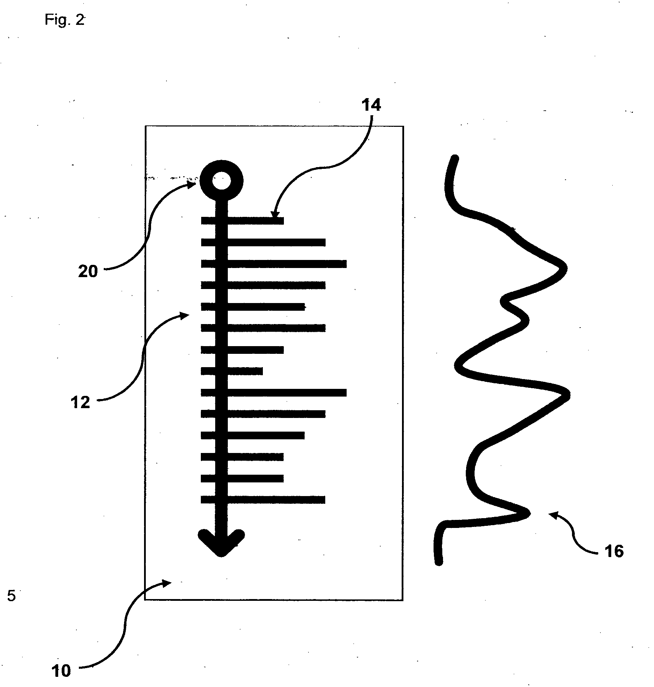

Deutlich zu sehen ist, dass dieser Verlauf in der Figur 2 den Verlauf der Außenlinie der elektrisch leitfähigen Struktur (12) widerspiegelt, das heißt der gewellten äußeren Form auf der rechten Seite der elektrisch leitfähigen Struktur (12) auf dem kartenähnlichen Objekt (10). Bei der in Figur 2 abgebildeten bevorzugten Ausführungsform der elektrisch leitfähigen Struktur (12) wird vorteilhafterweise das Konzept der Amplitudenmodulation umgesetzt, bei dem die Länge der Einzelelemente (14) in direktem Zusammenhang mit dem Signalverlauf steht.

Der räumliche Verlauf des zeitabhängigen Signals (16) entspricht im Fall der Figur 2 insbesondere deshalb dem Verlauf der Außenlinie der elektrisch leitfähigen Struktur (12), da die streifenförmigen Einzelelemente (14) auf der linken Seite der Figur eine einheitliche Anfangsposition einnehmen, so dass die linke Außenlinie der elektrisch leitfähigen Struktur (12) in Figur 2 von einer geraden, strichförmigen Außenlinie gebildet wird. Der Pfeil in den Figuren markiert den Verlauf einer Relativbewegung (20), die bevorzugt dadurch durchgeführt wird indem ein Eingabemittel (18) über eine elektrisch leitfähige Struktur (12) geführt oder bewegt wird. Vorzugsweise markiert der Kreis den Anfangspunkt der Bewegung und die Pfeilspitze ein mögliches Ende der Bewegung, sowie die Richtung, in der die Bewegung des Eingabemittels (18) erfolgt, ohne darauf beschränkt zu sein. Figur 2 zeigt auch, dass der räumliche Verlauf des zeitlich veränderlichen Signals (16) eine Überlagerung aus den einzelnen Signalen darstellt, die jedes Einzelelement (14) der elektrisch leitfähigen Struktur (12) auf dem Flächensensor hervorruft. Der Grad dieser Überlagerung kann vorteilhafterweise bei der Auswertung des vom Flächensensor (22) detektierten Signals eingestellt werden und ist insofern veränderlich. Er hängt insbesondere auch vom Abstand der Einzelelemente (14) der elektrisch leitfähigen Struktur (12) untereinander, sowie von der Größe des Eingabemittels (18) ab.

Figur 2 zeigt insbesondere ein kartenähnliches Objekt (10) mit einer elektrisch leitfähigen Struktur (12), die durch unterschiedlich lange, äquidistant angeordnete Einzelelemente (14) gekennzeichnet ist. Die vorgesehene "Bedienspur" für die Relativbewegung (20) zwischen Eingabemittel (18) und kartenähnlichem Objekt (10) liegt außermittig am Rand der elektrisch leitfähigen Struktur (12). Das resultierende zeitabhängige Signal (16) entsteht in dieser bevorzugten Ausgestaltung der Erfindung vorzugsweise neben der Bedienspur.

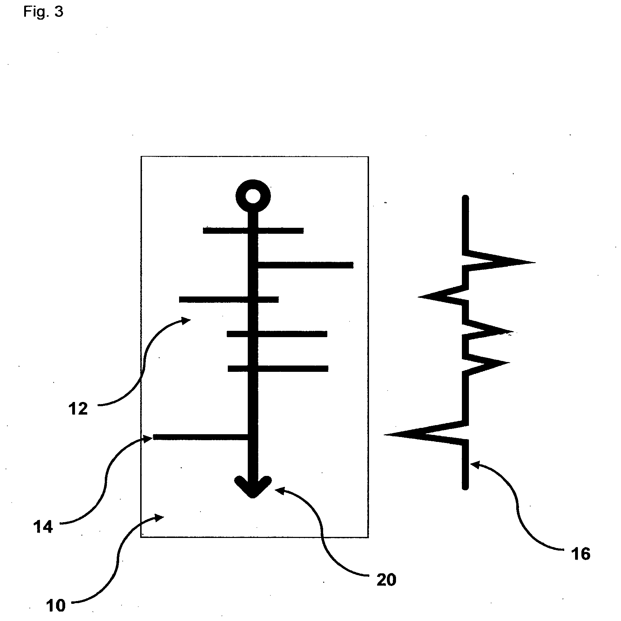

Figur 3 zeigt ein kartenähnliches Objekt (10) mit einer elektrisch leitfähigen Struktur (12), die durch gleich lange Einzelelemente (14) gekennzeichnet ist, die nicht in einem gleichen Abstand untereinander angeordnet sind. Die vorgesehene "Bedienspur" für die Relativbewegung (20) zwischen Eingabemittel (18) und kartenähnlichen Objekt (10) liegt in der Mitte der elektrisch leitfähigen Struktur (12). Das resultierende zeitabhängige Signal (16) entsteht in dieser bevorzugten Ausgestaltung der Erfindung vorzugsweise beidseitig der Bedienspur. Durch die vergrößerten Abstände zwischen den Einzelelementen (14) wird das zeitabhängige Signal (16) immer wieder zur Nullposition zurückgeführt. Bei dieser bevorzugten Anordnung der Einzelelemente (14) kann insbesondere eine besonders einfache Erkennung der Bedienspur, beispielsweise durch eine Auswertesoftware, ermöglicht werden. Bei dieser bevorzugten Ausführungsform der Erfindung werden vorzugsweise die Konzepte der Amplituden- und Frequenzmodulation kombiniert. Die Amplitude des resultierenden Signals (16) ergibt sich vorzugsweise aus den Längen der Einzelelemente (14). Die Frequenz des Signals (16) ergibt sich bevorzugt aus den Abständen zwischen den Einzelelementen (14). Es ist selbstverständlich auch möglich, die in den Figuren 1 bis 3 dargestellten bevorzugten Ausführungsformen der elektrisch leitfähigen Strukturen (12) miteinander zu kombinieren.

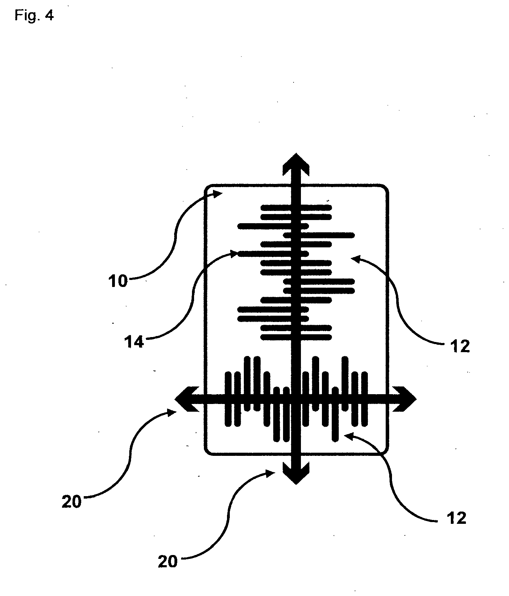

Die Figuren 4 bis 15 zeigen Anwendungsmöglichkeiten von verschiedenen bevorzugten Ausführungsformen der Erfindung. Figur 4 zeigt ein kartenähnliches Objekt (10), auf dem zwei unabhängige elektrisch leitfähige Strukturen (12) angeordnet sind. Diese beiden elektrisch leitfähigen Strukturen (12) weisen jeweils eigene Bedienpfade auf, die in diesem Ausführungsbeispiel einmal vertikal und einmal horizontal verlaufen. Damit ergeben sich insgesamt vier Interaktionsrichtungen: von oben nach unten, von unten nach oben, von links nach rechts und von rechts nach links. Jede elektrisch leitfähige Struktur (12) kann in Abhängigkeit der Richtung der Relativbewegung (20) unterschiedliche Aktionen auf dem Gerät, welches den kapazitiven Flächensensor (20) beinhaltet, auslösen.

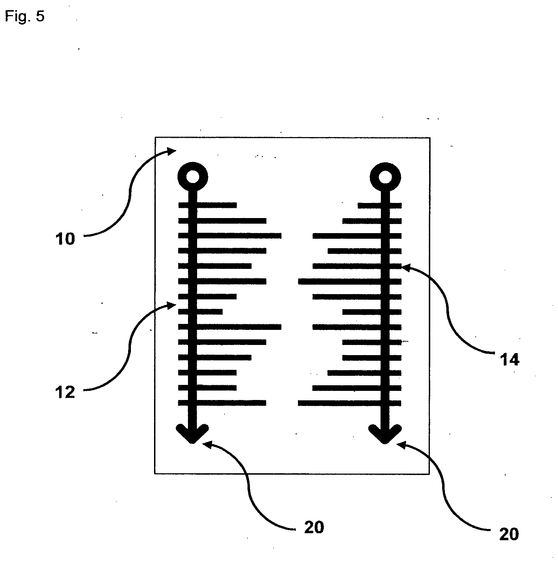

Figur 5 zeigt ebenfalls ein kartenähnliches Objekt (10), auf dem zwei unabhängige elektrisch leitfähige Strukturen (12) angeordnet sind. Diese beiden elektrisch leitfähigen Strukturen (12) weisen jeweils eigene Bedienpfade auf, die an verschiedenen Positionen auf dem kartenähnlichen Objekt (10) angeordnet vorliegen. Somit kann ein kartenähnliches Objekt (10) in Abhängigkeit des gewählten Bewegungspfades unterschiedliche Aktionen auf dem Gerät, welches den kapazitiven Flächensensor (20) beinhaltet, auslösen.

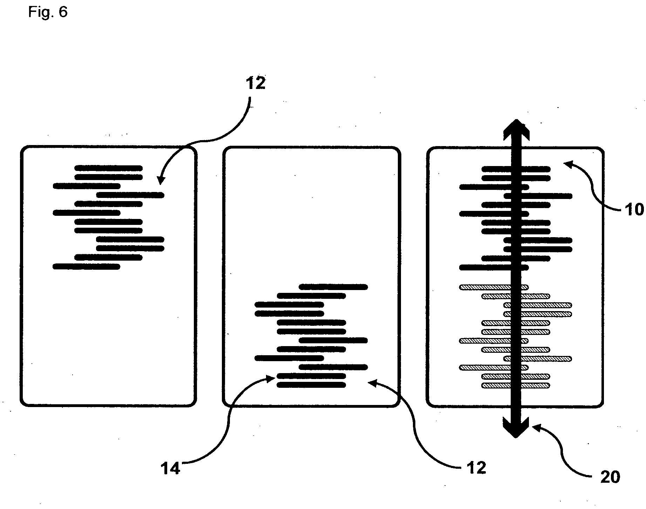

Figur 6 zeigt zwei elektrisch leitfähige Strukturen (12), eine auf der Vorderseite des kartenähnlichen Objektes (10) (in der Abbildung links dargestellt) und eine auf der Rückseite des kartenähnlichen Objektes (10) (in der mittigen Abbildung dargestellt). Damit können zum Beispiel wie bei klassischen Kartenspielen gleiche Rückseiten im gesamten Spiel mit unterschiedlichen Vorderseiten kombiniert werden. Beide elektrisch leitfähige Strukturen (12) bewirken die Erzeugung eines zusammengesetzten Signals (16) auf dem kapazitiven Flächensensor (22) bei Relativbewegung (20) eines Eingabemittels (18) entlang des Bewegungspfades auf dem kartenähnlichen Objekt (10).

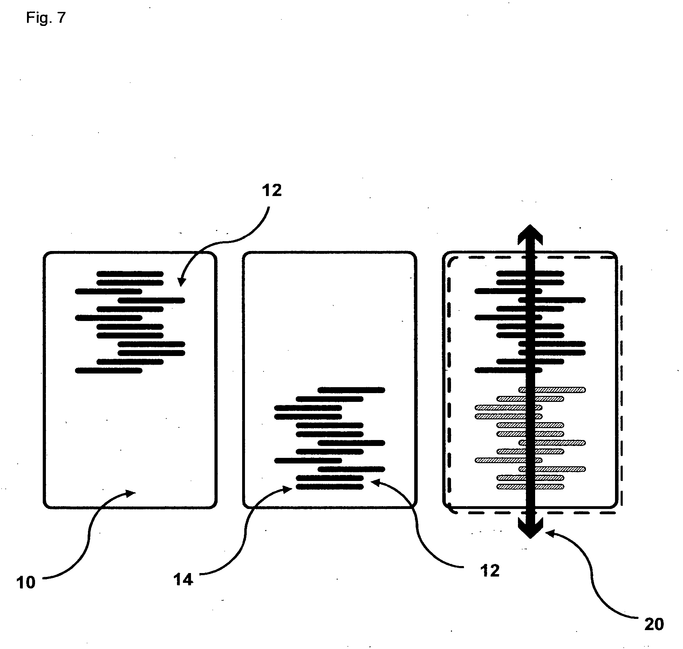

Figur 7 zeigt einen ähnlichen Ansatz wie Figur 6. Hier sind zwei verschiedene elektrisch leitfähige Strukturen (12) auf zwei verschiedenen Karten (10) angeordnet. Diese werden zum Auslesen übereinander auf den kapazitiven Flächensensor (22) gelegt und sind nacheinander in Wirkkontakt, wenn das Eingabemittel (18) auf dem Stapel aus kartenähnlichen Objekten (10) entlang des Bewegungspfades relativ zu den Karten (10) bewegt wird.

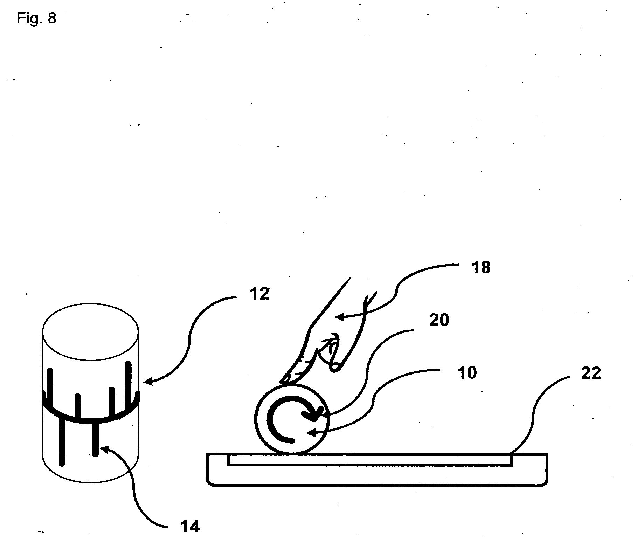

Figur 8 zeigt die Anordnung der elektrisch leitfähigen Struktur (12) auf einem Zylinder, wobei ein kartenähnliches Objekt (10) mit einer elektrisch leitfähigen Struktur (12) beispielsweise auf einer Außenseite des Zylinders angeordnet vorliegen kann. Das kartenähnliche Objekt (10) kann auch in Form eines Aufklebers oder eines Labels vorliegen, das an einem vorzugsweise dreidimensionalen Objekt angebracht werden kann. In dieser bevorzugten Ausführungsform der Erfindung sind die Einzelelemente (14) über einen umlaufenden Hauptstrang miteinander verbunden. Der Benutzer berührt den Zylinder im Bereich des Hauptstranges und bewegt den Zylinder rollend über den kapazitiven Flächensensor (22). Die Anordnung der Einzelelemente (14), die zum jeweiligen Zeitpunkt mit dem kapazitiven Flächensensor (22) in Wirkkontakt stehen, erzeugen bevorzugt ein Signal (16) auf dem kapazitiven Flächensensor (22).

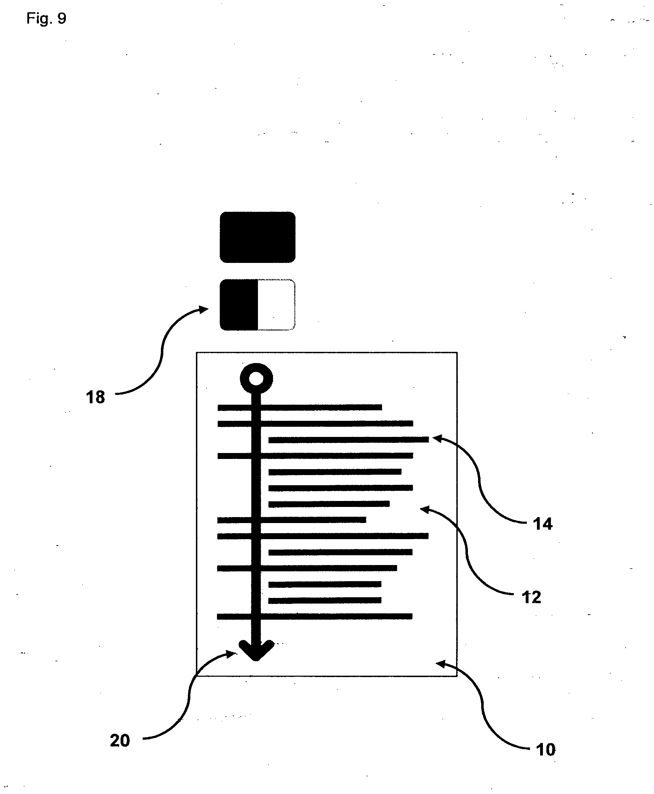

Figur 9 zeigt ein kartenähnliches Objekt (10), auf dem eine elektrisch leitfähige Struktur (12) angeordnet ist, die einen Bedienpfad aufweist. Die Eingabe erfolgt bevorzugt durch eine Relativbewegung (20) des Eingabemittels (18) entlang dieses Bedienpfades. Es sind insbesondere zwei verschiedene Ausgestaltungsformen des Eingabemittels (18) dargestellt. Je nach Ausgestaltung des Eingabemittels (18) werden unterschiedliche Signale (16) auf dem kapazitiven Flächensensor (22) erzeugt. Das Rechteck mit abgerundeten Ecken stellt in Figur 9 jeweils das Eingabemittel (18) dar. Der elektrisch leitfähige Bereich ist schwarz dargestellt. Das oben dargestellte bevorzugte Eingabemittel ist vollflächig elektrisch leitfähig ausgebildet; das darunter dargestellte Eingabemittel ist beispielhaft nur auf der linken Hälfte elektrisch leitfähig ausgebildet. Jedes Eingabemittel (18) erzeugt somit ein anderes Signal bei Relativbewegung (20) über das gleiche kartenähnliche Objekt (10) auf dem kapazitiven Flächensensor (22) und kann damit unterschiedliche Aktionen auf dem Gerät, welches den kapazitiven Flächensensor (22) beinhaltet, auslösen. Eine mögliche Anwendung ist die Unterscheidung von Nutzern, Spielern oder Anwendern durch die Bereitstellung verschiedener Eingabemittel.

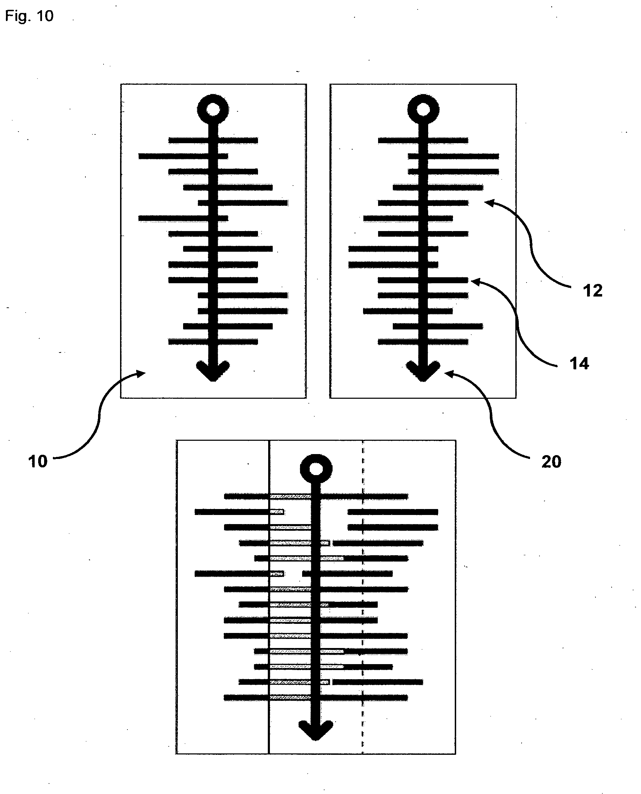

Figur 10 zeigt zwei unterschiedliche kartenähnliche Objekte (10). Insbesondere unterscheiden sich die kartenähnlichen Objekte durch die Ausgestaltung ihrer elektrisch leitfähigen Strukturen (12). Hier sind zwei verschiedene elektrisch leitfähige Strukturen (12) auf zwei verschiedenen Karten (10) angeordnet. Diese werden zum Auslesen zur Hälfte überlappend auf den kapazitiven Flächensensor (22) gelegt und sind somit gleichzeitig in Wirkkontakt bei Relativbewegung (20) des Eingabemittels (18) auf dem Stapel aus kartenähnlichen Objekten (10) entlang des Bewegungspfades. Jede der drei elektrisch leitfähigen Strukturen (12) - die der ersten Karte, die der zweiten Karte und die der Kombination aus beiden Karten - kann unterschiedliche Aktionen auf dem Gerät, welches den kapazitiven Flächensensor (22) beinhaltet, auslösen.

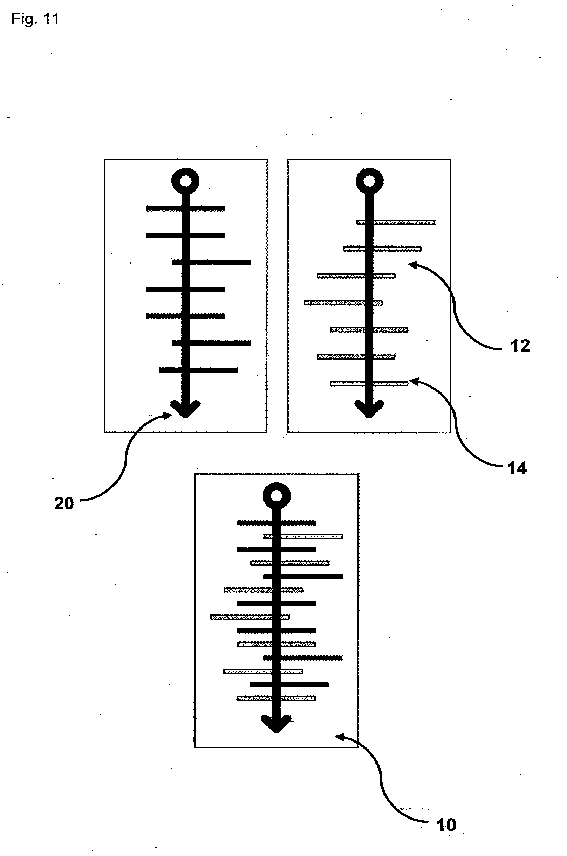

Figur 11 zeigt zwei unterschiedliche kartenähnliche Objekte (10). In dieser bevorzugten Ausführungsform der Erfindung sind zwei verschiedene elektrisch leitfähige Strukturen (12) auf zwei verschiedenen Karten (10) angeordnet. Diese werden zum Auslesen übereinander auf den kapazitiven Flächensensor (22) gelegt und sind somit bevorzugt gleichzeitig in Wirkkontakt bei Relativbewegung (20) des Eingabemittels (18) auf dem Stapel aus kartenähnlichen Objekten (10) entlang des Bewegungspfades. Die elektrisch leitfähigen Strukturen (12) auf den beiden Karten (10) sind zueinander versetzt und können einander überlagern, wenn die Karten (10) übereinanderliegen. Jede der drei elektrisch leitfähigen Strukturen (12) - die der ersten Karte, die der zweiten Karte und die der Kombination aus beiden Karten - kann unterschiedliche Aktionen auf dem Gerät, welches den kapazitiven Flächensensor (22) beinhaltet, auslösen.

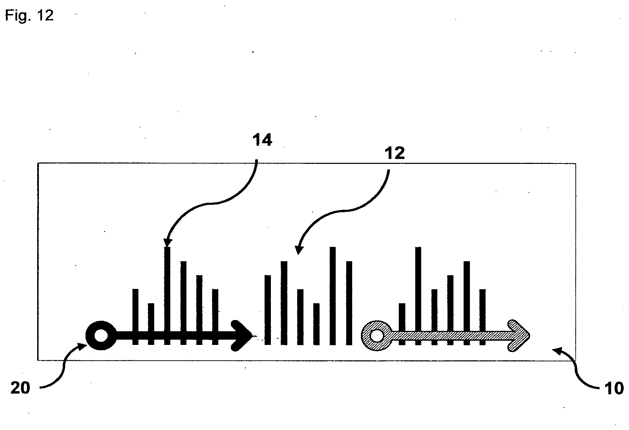

Figur 12 zeigt ein kartenähnliches Objekt (10), auf dem mehrere elektrisch leitfähige Strukturen (12) angeordnet sind. Das kartenähnliche Objekt (10) wird zum Auslesen auf den kapazitiven Flächensensor (22) gelegt. Je nach gewählter Position des Bewegungspfades bei Relativbewegung (20) des Eingabemittels (18) auf dem kartenähnlichen Objekt (10) können unterschiedliche Aktionen auf dem Gerät, welches den kapazitiven Flächensensor (22) beinhaltet, ausgelöst werden. Damit ist die Eingabe einer Auswahl möglich. Eine mögliche Anwendung kann zum Beispiel die Auswahl einer Antwort und/oder Eingabe in einem Spiel oder Quiz sein.

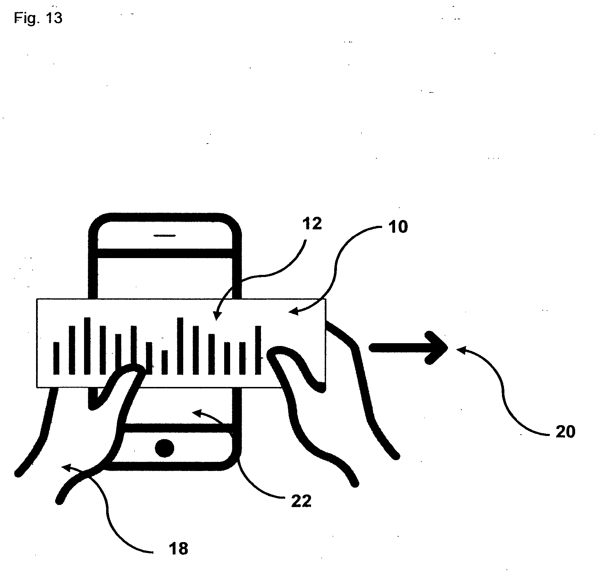

Figur 13 zeigt ein kartenähnliches Objekt (10) mit elektrisch leitfähiger Struktur (12), welches zum Auslesen über den kapazitiven Flächensensor (22) gezogen wird und dabei mit dem Eingabemittel (18), beispielsweise einem menschlichen Finger oder einem anderen Handbestandteil, berührt wird. Das kartenähnliche Objekt kann in dieser Ausführungsform eine Länge aufweisen, die deutlich größer als die Breite des Objekts ist. Bevorzugt können beispielsweise auch bahnenartige Objekte sein, die beispielsweise auf Rollen aufgewickelt bereitgestellt werden. In dieser bevorzugten Ausführungsform der Erfindung wird die Relativbewegung (20) des Eingabemittels (18) auf dem kartenäh-lichen Objekt (10) durch die Bewegung des kartenähnlichen Objektes (10) verursacht, das heißt das kartenähnliche Objekt (10) wird zwischen kapazitivem Flächensensor (22) und dem Eingabemittel (18) hindurchgezogen. Der räumliche Verlauf des zeitabhängigen Signals (16) stellt in diesem Beispiel keine wellenartige Linie dar, sondern folgt einer Auf- und Ab-Bewegung in dem Bereich, in dem das Eingabemittel (18) in räumlicher Beziehung zum Flächensensor (22) steht.

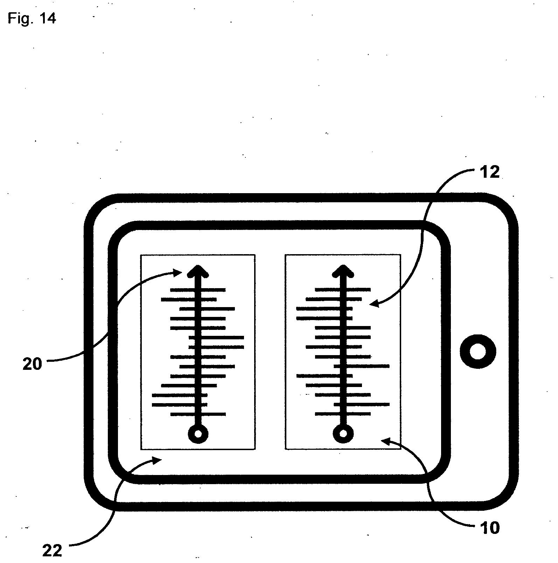

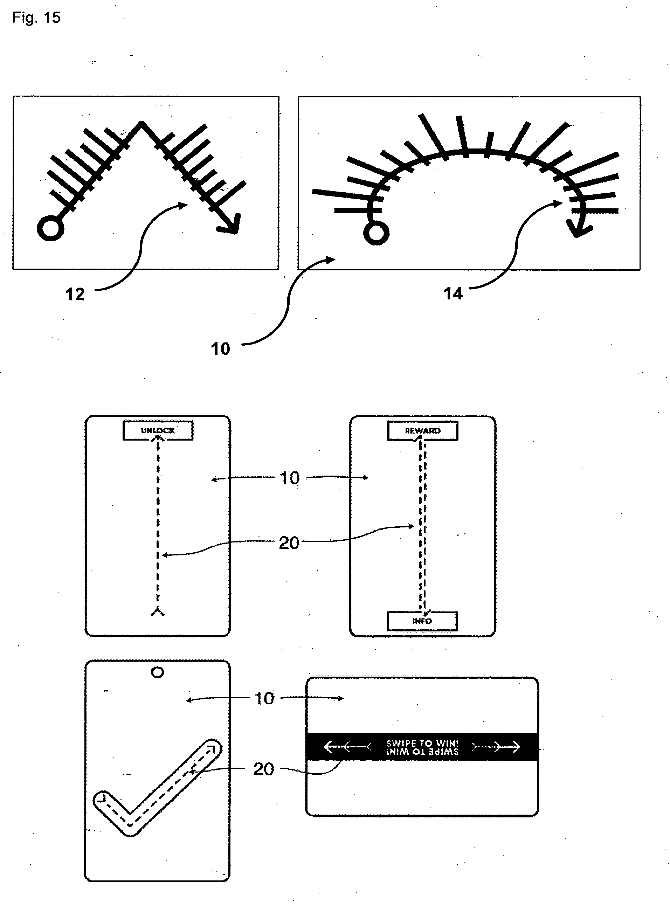

Figur 14 zeigt die gleichzeitige Verwendung von zwei kartenähnlichen Objekten (10) mit elektrisch leitfähiger Struktur (12) auf einem kapazitiven Flächensensor (22). Figuren 15 a und b zeigen kartenähnliche Objekte (10) mit elektrisch leitfähiger Struktur (12). Es sind Varianten von Bewegungspfaden oder Bedienspuren dargestellt. Bewegungspfade können in beliebiger Richtung verlaufen, die Richtung ändern und/oder gekrümmt sein. Der untere Teil der Figur 15 zeigt weitere Varianten von Bewegungspfaden oder Bedienspuren, entlang derer das Eingabemittel (nicht dargestellt) auf dem kartenähnlichen Objekt (10) geführt werden kann.

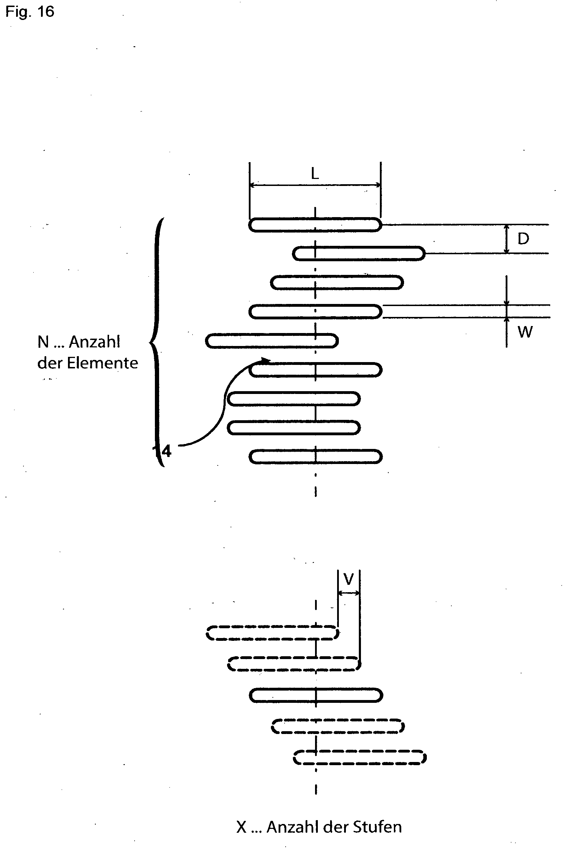

Figur 16 zeigt den Zusammenhang zwischen Design der elektrisch leitfähigen Struktur (12) des kartenähnlichen Objekts (10) und der Datenkapazität. Die in Figur 16 dargestellte bevorzugte Ausführungsform des kartenähnlichen Objektes (10) weist eine elektrisch leitfähige Struktur (12) auf, die aus im Wesentlichen gleichförmigen Einzelelementen (14) besteht. Die Form der Einzelelemente (14) kann zum Beispiel rechteckig mit abgerundeten Ecken sein. Das Design ist durch folgende Kennwerte charakterisierbar:

- Anzahl N der Einzelelemente (14)
- Breite W des Einzelelements (14)
- Länge L des Einzelelements (14)
- Abstand D zwischen den Einzelelementen (14)
- Anordnung der Einzelelemente (14) in X Stufen
- Stufenabstand V

Die Gesamtbreite $W_{ges}$ der elektrisch leitfähigen Struktur (12) ist

$$W_{ges} = L + (X - 1) * V$$

Die Gesamtlänge $L_{ges}$ der elektrisch leitfähigen Struktur (12) ist

$$L_{ges} = (N - 1) * D + W$$

Daraus ergibt sich ein Flächenbedarf $A_{ges}$ der elektrisch leitfähigen Struktur (12) von

$$A_{ges} = W_{ges} \times L_{ges}$$

Die theoretische Datenkapazität C berechnet sich nach

$$C = X^N$$

Die daraus resultierende Datendichte $C_A$ (Datenkapazität pro Fläche) ist

$$C_A = \frac{C}{A_{ges}}$$

Die folgende Tabelle gibt einen Überblick über konkrete Ausführungsbeispiele. Diese Beispiele orientieren sich an Außenabmessungen von kartenähnlichen Objekten (10), zum Beispiel Visitenkarten, Spielkarten etc. und sind auf beliebige andere Formate anwendbar.

| Beispiel | N | W/mm | L/mm | D/mm | X | V/mm | W_ges / mm | L_ges / mm | A_ges/ mm2 | C |
|---|---|---|---|---|---|---|---|---|---|---|
| 1 | 9 | 5 | 40 | 7 | 3 | 10 | 60 | 61 | 3.660 | 19.683 |
| 2 | 10 | 2 | 30 | 6 | 3 | 10 | 50 | 56 | 2.800 | 59.049 |
| 3 | 9 | 3 | 30 | 7 | 5 | 5 | 50 | 59 | 2.950 | 1.953.125 |
| 4 | 10 | 3 | 30 | 7 | 5 | 5 | 50 | 66 | 3.300 | 9.765.625 |
| 5 | 16 | 2 | 30 | 5 | 5 | 5 | 50 | 77 | 3.850 | 152.587.890.625 |
| 6 | 12 | 2 | variabel | 6 | 4 | 5 | 40 | 68 | 2.720 | 16.777.216 |

Zur sicheren Auswertung des Signals (16) auf dem kapazitiven Flächensensor (22) kann es von Vorteil sein zum Beispiel das erste und letzte Einzelelement (14) immer in der Nullposition anzuordnen. Dann berechnet sich die theoretische Datenkapazität C wie folgt:

$$C = X^{(N-2)}$$

Für Beispiel 3 ergeben sich damit folgende Ergebnisse:

| Beispiel | N | W/mm | L/mm | D/mm | X | V/mm | W_ges/mm | L_ges/mm | A_ges/mm | C |
|---|---|---|---|---|---|---|---|---|---|---|
| 3A | 9 | 3 | 30 | 7 | 5 | 5 | 50 | 59 | 2.950 | 78.125 |

Diese theoretischen Werte sind Bruttowerte. Die Nutzdaten können durch Implementierung von Prüfsummen, Redundanz oder Fehlererkennungs- und/oder-korrekturalgorithmen geringer sein.

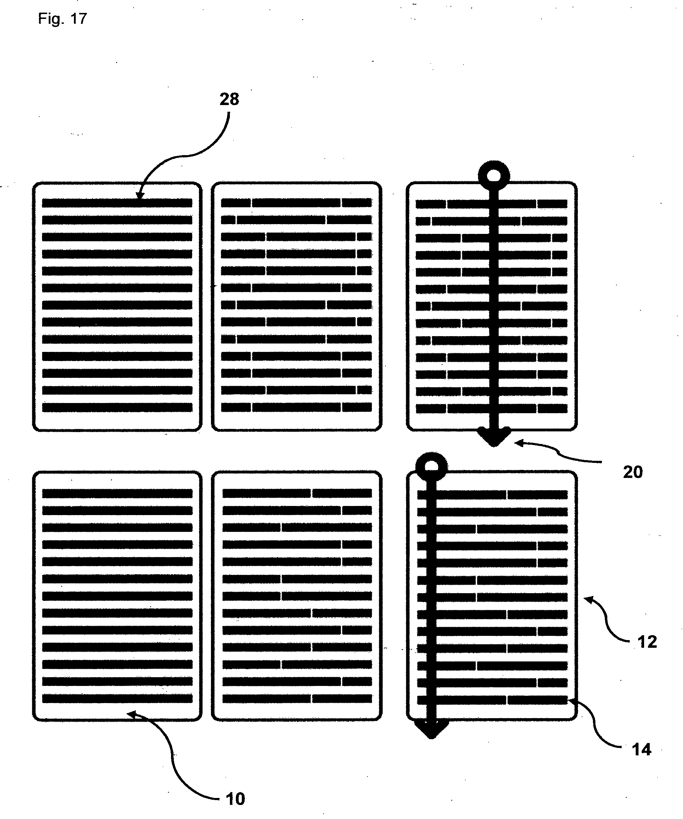

Figur 17 zeigt beispielhaft, wie eine elektrisch leitfähige Struktur (12) im Sinne der vorliegenden Erfindung auf ein kartenähnliches Objekt (10) aufgebracht werden kann. Dabei wird in einem ersten Prozessschritt (linke Abbildung) eine erste elektrisch leitfähige Struktur, die im Sinne der Erfindung bevorzugt auch als Grundstruktur (28) bezeichnet wird, auf ein Substrat, beispielsweise ein kartenähnliches Objekt (10), aufgetragen. Dies kann beispielsweise durch die Verwendung von elektrisch leitfähiger Farbe oder Folientransferverfahren geschehen. Die Grundstruktur (28) kann beispielsweise aus gleichförmigen äquidistanten Einzelelementen bestehen, zum Beispiel Rechtecken. In einem zweiten Prozessschritt werden die elektrisch leitfähigen Einzelelemente an bestimmten Stellen mittels Laserablation galvanisch voneinander getrennt, das heißt an diesen Stellen wird das elektrisch leitfähige Material selektiv abgetragen. Dies wird jeweils in der mittleren Abbildung von Figur 17 dargestellt. Damit können einzigartige, d.h. individualisierte, Strukturen effizient hergestellt werden. Ein überraschender Vorteil dieses Herstellungsverfahren ist die gute optische Versteckbarkeit der elektrisch leitfähigen Struktur (12). Auch nach Überdrucken oder Abdecken der elektrisch leitfähigen Struktur (12) mittels Laminat oder Label können elektrisch leitfähige Strukturen (12) bei herkömmlichen Herstellungs- und/oder Druckverfahren bei Gegenlicht gegebenenfalls für das menschliche Auge sichtbar bleiben. Ist die Struktur (12) über die gesamte Fläche verteilt und nur an bestimmten Stellen durch einen dünnen Laserschnitt getrennt, ist diese Struktur (12) wesentlich schwieriger mit dem bloßen Auge zu erkennen. Der Pfeil in den rechten Abbildungen zeigt eine mögliche Bedienspur auf den so, mittels Laserablation erzeugten, kartenähnlichen Objekten, wobei die Bedienspur beispielsweise mittig oder an einer Seite der elektrisch leitfähigen Struktur (12) angeordnet sein kann. Vorzugsweise wird im Bereich der geplanten Bedienspur kein elektrisch leitfähiges Material abgetragen, so dass eine Eingabe mit einem Eingabemittel (nicht dargestellt) aufgrund der galvanischen Verbindung innerhalb des Einzelelementes (14) der elektrisch leitfähigen Struktur (12) in den Bereich eines Wirkkontakts der Struktur (12) übertragen werden kann, wo die Eingabe vom Flächensensor (nicht dargestellt) detektierbar ist. Es ist in dieser bevorzugten Ausführungsform der Erfindung bevorzugt, dass die Relativbewegung (20) zwischen Eingabemittel und kartenähnlichen Objekt (10) in dem Bereich erfolgt, in dem kein elektrisch leitfähiges Material abgetragen wird.

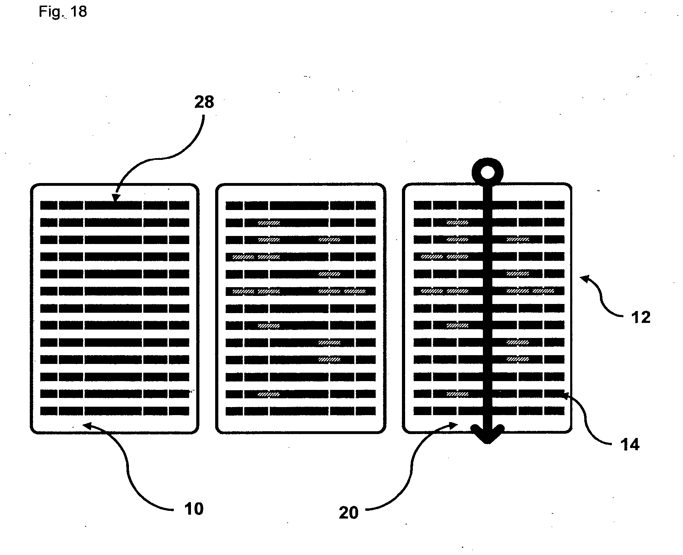

Figur 18 zeigt beispielhaft ein weiteres Verfahren zur Aufbringung einer elektrisch leitfähigen Struktur (12) auf ein kartenähnliches Objekt (10). Insbesondere ist es durch die in Figur 17 und 18 beispielhaft dargestellten Verfahren möglich, elektrisch leitfähige Strukturen (12) auf einem kartenähnlichen Objekt (10) nachträglich zu individualisieren, d.h. im Sinne der Erfindung bevorzugt, eine zunächst aufgebrachte elektrisch leitfähige Grundstruktur so zu bearbeiten, dass sich die elektrisch leitfähigen Strukturen (12) unterschiedlicher kartenähnlicher Objekte (10) voneinander unterscheiden und dieser Unterschied von einem Flächensensor (22) detektiert werden kann. Es kann im Sinne der Erfindung ebenso bevorzugt sein, mehrere auf einem kartenähnlichen Objekt (10) angeordnete elektrisch leitfähige Strukturen (12) voneinander unterscheidbar zu machen.

Bei dem in Figur 18 dargestellten Verfahren werden elektrisch leitfähige Brücken nachträglich auf dem kartenähnlichen Objekt (10) angebracht. Dazu wird in einem ersten Schritt eine elektrisch leitfähige Grundstruktur auf ein kartenähnliches Objekt (10), dem Substrat, aufgetragen. Die elektrisch leitfähige Grundstruktur wird beispielsweise durch die Verwendung elektrisch leitfähiger Farbe oder durch Folientransferverfahren auf das kartenähnliche Objekt aufgebracht. Die Grundstruktur umfasst bevorzugt äquidistante Einzelelemente (14), die zum Beispiel rechteckig und/oder streifenförmig ausgebildet sein können und die an bestimmten Stellen Unterbrechungen aufweisen. Eine mögliche bevorzugte Ausführungsform einer solchen Grundstruktur ist in der linken Abbildung der Figur 18 dargestellt. In einem zweiten Prozessschritt können die Unterbrechungen selektiv mittels elektrisch leitfähiger Farbe bedruckt werden, wodurch sie vorteilhafterweise galvanisch oder kapazitiv miteinander verbunden werden, wie in der mittleren Abbildung von Figur 18 gezeigt wird. Eine mögliche Bedienspur kann in dieser bevorzugten Ausgestaltung der Erfindung bevorzugt in einem solchen Bereich der elektrisch leitfähigen Struktur (12) angeordnet sein, in dem in allen Einzelelementen (14) der elektrisch leitfähigen Struktur (12) keine Unterbrechungen vorliegen. Dies ist in der rechten Abbildung der Figur 18 dargestellt.

Figur 19 zeigt eine bevorzugte Ausführungsform des kartenähnlichen Objekts (10), bei der die endgültige Form der elektrisch leitfähigen Struktur (12) beziehungsweise deren Einzelelemente (14), durch Stanzen erzeugt wird. Die Stanzkontur ist in der mittleren Abbildung als Strichlinie dargestellt. Insbesondere zeigt Figur 19, wie durch einen Stanzvorgang eine neue elektrisch leitfähige Struktur (12, rechts) aus einer zuvor bestehenden elektrisch leitfähigen Grundstruktur (28, links) erzeugt werden kann.

Figur 20 zeigt eine bevorzugte Ausführungsform des kartenähnlichen Objekts (10), bei der das kartenähnliche Objekt (10) die elektrisch leitfähige Struktur (12) sowie einen RFID-Tag umfasst, der zwischen den Einzelelementen der elektrisch leitfähigen Struktur (12) angeordnet ist.

Figur 21 zeigt eine bevorzugte Ausführungsform des kartenähnlichen Objekts (10), bei der die elektrisch leitfähige Struktur (12) Einzelelemente (14) umfasst, die ganz oder teilweise aus einem zweiten Material hergestellt sind, wobei das zweite Material andere elektrische Eigenschaften aufweist als ein erstes Material, aus dem die übrigen Einzelelemente (14) der elektrisch leitfähigen Struktur (12) hergestellt sind. Die Bereiche der Einzelelemente (14), die aus einem zweiten Material bestehen, sind im unteren Teil der Figur schraffiert dargestellt. Obwohl die Geometrie beziehungsweise äußere Form der elektrisch leitfähigen Struktur, die teilweise aus einem zweiten Material besteht, deckungsgleich zur oben dargestellten elektrisch leitfähigen Struktur (12) ist, ist das resultierende zeitabhängige Signal (16) verändert gegenüber der elektrisch leitfähigen Struktur ohne zweites Material.

Figur 22 zeigt eine mögliche Anwendung der Erfindung im Bereich der Banknotenherstellung beziehungsweise im Bereich der sicherheitsrelevanten Dokumente, wie Ausweise, Führerscheine, Zertifikate und dergleichen. Die Ausschnittsvergrößerung (3-fache Vergrößerung) zeigt eine mögliche Gestaltungsvariante der elektrisch leitfähigen Struktur (12) sowie des Verwirrmusters. Die Einzelelemente der elektrisch leitfähigen Struktur (12) sind in diesem Beispiel nicht vollflächig gefüllt, sondern als Wabenstruktur realisiert. Innerhalb der elektrisch leitfähigen Struktur (12) sind die einzelnen Waben galvanisch miteinander verbunden beziehungsweise berühren sich gegenseitig und stellen somit in sich geschlossene elektrisch leitfähige Elemente dar. Auf dem kartenähnlichen Objekt (10) ist zusätzlich zur elektrisch leitfähigen Struktur (12) ein optisches Verwirrmuster aufgebracht. Auch das Verwirrmuster besteht aus wabenförmigen Elementen. Diese Elemente sind jedoch nicht galvanisch miteinander verbunden und beeinflussen somit die Ablenkung und/oder die Modulation des zeitabhängigen Signals nicht.

Figur 23 zeigt eine mögliche Ausführungsform des kartenähnlichen Objekts (10) mit Objekten, die einen möglichen Bedienpfad für den Nutzer des Objekts (10) oder des Systems umfassend das kartenähnliche Objekt (10) und einen kapazitiven Flächensensor (nicht dargestellt) vorgeben können. Je nachdem, welcher Bedienpfad gewählt wird, wird auf dem Flächensensor (nicht dargestellt) ein anderes zeitabhängiges Signal hervorgerufen, weil verschiedene Einzelelemente (14) der elektrisch leitfähigen Struktur (12) in Wirkkontakt gebracht werden.

In dem in Figur 23 dargestellten Beispiel kann beispielsweise auf dem kartenähnlichen Objekt (10) eine Zahlenfolge vorgegeben werden, entlang derer der Nutzer die Relativbewegung (20) ausführt und das kartenähnliche Objekt (10), welches auf dem Flächensensor (nicht dargestellt) aufliegt, berührt oder abfährt, wodurch sich vorzugsweise ein Bedienpfad ergibt. Die Zahlenfolge kann beispielsweise vom Gerät, welches den Flächensensor beinhaltet, bei jeder Anwendung neu vorgegeben werden und ermöglicht somit sicherheitsrelevante Anwendungen, die mittels einer TAN (Transaktionsnummer) abgesichert werden sollen.

Figur 24 zeigt eine bevorzugte Ausführungsform des kartenähnlichen Objekts (10) umfassend eine elektrisch leitfähige Struktur (12), bei der das kartenähnliche Objekt zumindest teilweise um ein anderes Objekt herumgewickelt wird. Diese Ausführungsform ist beispielsweise für dickere Substratmaterialien von Interesse, die beispielsweise größer als 1 mm sein können.

Figur 25 zeigt eine bevorzugte Ausführungsform der Erfindung, bei der ein mehrschichtiger Kartenaufbau in Form einer Plastikkarte vorliegt. Dieser Kartenaufbau bildet in der in Figur 25 dargestellten bevorzugten Ausführungsform der Erfindung das kartenähnliche Objekt (10). Es ist im Sinne dieser Ausführungsform bevorzugt, dass die leitfähige Struktur (12) innerhalb des kartenähnlichen Objekts (10) angeordnet vorliegt und die Einzelelemente (14) der elektrisch leitfähigen Struktur (12) bevorzugt um weitere Sicherheitsmerkmale auf dem kartenähnlichen Objekt herum angeordnet sind.

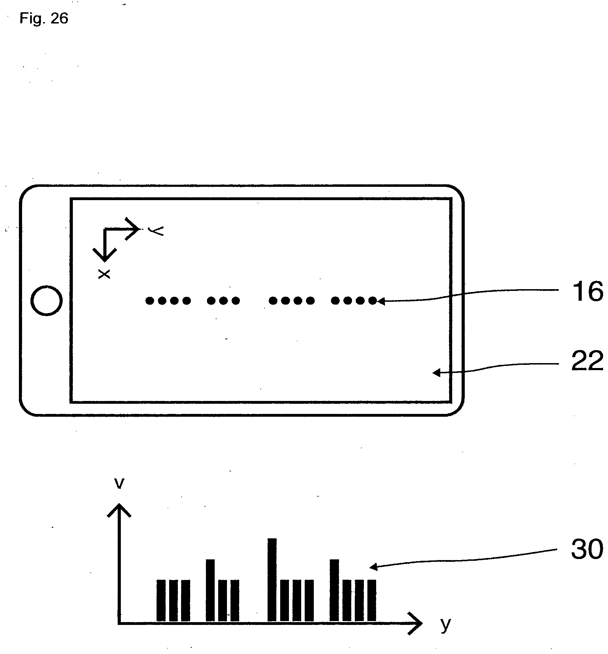

Figur 26 zeigt einen Flächensensor (22) als Teil eines Smartphones. In Figur 26a ist auf dem Display des Smartphones ist das zeitabhängige Signal (16) grafisch dargestellt. Die einzelnen Touch Events sind als Einzelpunkte dargestellt. In Figur 26b ist das dazugehörige Geschwindigkeitsprofil (30) des zeitabhängigen Signals (16) dargestellt. Dabei wurde für jedes einzelne Touch-Event mit Hilfe der Koordinaten sowie des Zeitstempels die Geschwindigkeit relativ zum vorangegangenen Touch Event berechnet und in Form eines Balkendiagramms dargestellt. Je größer der Balken, desto höher ist die lokale Geschwindigkeit des zeitabhängigen Signals (16) auf dem Flächensensor (22).

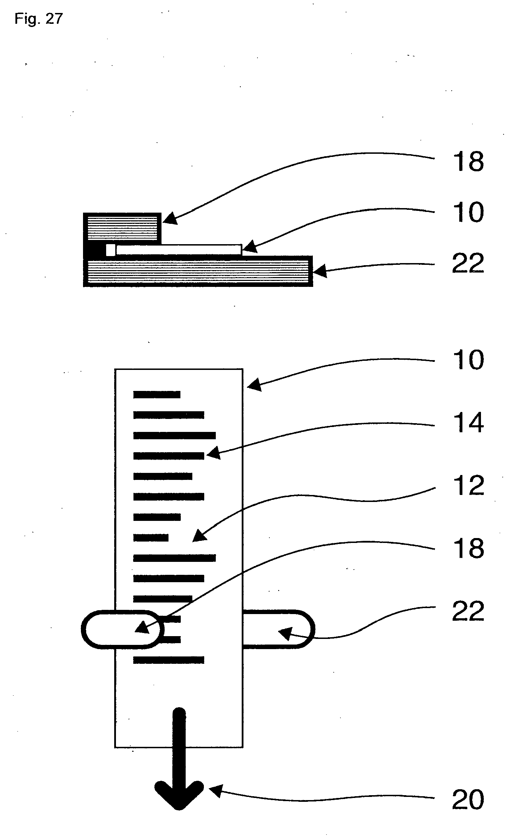

Figur 27 zeigt eine Ausführungsform, bei der das Eingabemittel (18) Teil des kapazitiven Flächensensors (22) ist bzw. das Eingabemittel (18) mit dem kapazitiven Flächensensor (22) verbunden ist. Die obere Grafik zeigt einen Querschnitt durch Flächensensor, Eingabemittel und kartenähnlichem Objekt. Die untere Grafik zeigt die Draufsicht. Das kartenähnliche Objekt (10) wird durch eine Relativbewegung (20) relativ zum Eingabemittel (18) bewegt. Das kartenähnliche Objekt (10) kann in diesem Ausführungsbeispiel auch als Rollenmaterial bereitgestellt werden, welches sich durch eine signifikant größere Länge im Vergleich zur Breite des Objekts auszeichnet. Die Einzelelemente (14) der elektrisch leitfähigen Struktur kommen somit nach und nach in Wirkkontakt mit dem Eingabemittel (18), wodurch vorteilhafterweise ein zeitabhängiges Signal (nicht dargestellt) auf dem kapazitiven Flächensensor (22) erzeugt wird.

**Bezugszeichenliste:**

| | |
|---|---|
| 10 | kartenähnliches Objekt |
| 12 | elektrisch leitfähige Struktur |
| 14 | Einzelelemente |
| 16 | zeitabhängiges Signal |
| 18 | Eingabemittel |
| 20 | Relativbewegung |
| 22 | Flächensensor |
| 24 | erster Wirkkontakt |
| 26 | zweiter Wirkkontakt |
| 28 | elektrisch leitfähige Grundstruktur |
| 30 | Geschwindigkeitsprofil |

**Patentansprüche**

1. Kartenähnliches Objekt (10)
   **dadurch gekennzeichnet, dass**
   das kartenähnliche Objekt (10) eine elektrisch leitfähige Struktur (12) aufweist, die eine Vielzahl von Einzelelementen (14) umfasst, die auf dem kartenähnlichen Objekt (10) angeordnet vorliegen, wobei die Einzelelemente (14) der elektrisch leitfähigen Struktur (12) hinsichtlich Größe, Abstand und Form so ausgebildet sind, dass ein aus einer Relativbewegung (20) zwischen einem Eingabemittel (18) und dem kartenähnlichen Objekt (10) resultierendes zeitabhängiges Signal (16) auf einem kapazitiven Flächensensor (22) gegenüber einer Referenz-Eingabe mit dem Eingabemittel (18), die ohne Verwendung des kartenähnlichen Objekts (10) erfolgt, verändert ist.

2. Kartenähnliches Objekt (10) nach Anspruch 1
   **dadurch gekennzeichnet, dass**
   die elektrisch leitfähige Struktur (12) mindestens zwei voneinander galvanisch getrennte Einzelelemente (14) umfasst, wobei die Einzelelemente (14) in einer Ebene angeordnet vorliegen.

3. Kartenähnliches Objekt (10) nach Anspruch 1 oder Anspruch 2
   **dadurch gekennzeichnet, dass**
   die Einzelelemente (14) der elektrisch leitfähigen Struktur (12) im Wesentlichen von Rechtecken gebildet werden, die im Wesentlichen parallel zueinander angeordnet vorliegen.

4. Kartenähnliches Objekt (10) nach einem oder mehreren der Ansprüche 1 bis 3
   **dadurch gekennzeichnet, dass**
   die Einzelelemente (14) der elektrisch leitfähigen Struktur (12) eine Breite von 0,1 mm bis 20 mm und/oder einen Abstand von 0,1 mm bis 30 mm aufweisen.

5. Kartenähnliches Objekt (10) nach einem oder mehreren der Ansprüche 1 bis 4
   **dadurch gekennzeichnet, dass**
   die Einzelelemente (14) der elektrisch leitfähigen Struktur (12) eine Breite von 0,1 mm bis 6 mm aufweisen.

6. Kartenähnliches Objekt (10) nach einem oder mehreren der Ansprüche 1 bis 5
   **dadurch gekennzeichnet, dass**
   die elektrisch leitfähige Struktur (12) in einem mehrstufigen Prozess umfassend folgende Schritte hergestellt wird:

   a) Applikation einer elektrisch leitfähigen Grundstruktur (28) mittels Folientransferverfahren oder elektrisch leitfähiger Farbe auf ein Substrat,
   b) Selektive Entfernung von Teilen der elektrisch leitfähigen Grundstruktur (28) mittels Laser, wodurch eine elektrisch leitfähige Struktur (12) mit Einzelelementen (14) erhalten wird, die räumlich voneinander getrennte Bereiche aufweisen.

**7.** Kartenähnliches Objekt (10) nach einem oder mehreren der Ansprüche 1 bis 6
**dadurch gekennzeichnet, dass**
die elektrisch leitfähige Struktur (12) in einem mehrstufigen Prozess umfassend folgende Schritte hergestellt wird:

a) Applikation einer elektrisch leitfähigen Grundstruktur (28) mittels Folientransferverfahren oder elektrisch leitfähiger Farbe auf ein Substrat,
b) Selektive Applikation von elektrisch leitfähigen Brücken und/oder zusätzlichen elektrisch leitfähigen Elementen mittels Inkjetdruck, mit dem elektrisch leitfähige Farbe auf das kartenähnliche Objekt (10) aufgebracht wird, wodurch eine elektrisch leitfähige Struktur (12) mit Einzelelementen (14) erhalten wird.

**8.** Verwendung des kartenähnlichen Objekts (10) nach einem oder mehreren der Ansprüche 1 bis 7 zur Erzeugung eines zeitabhängigen Signals (16) auf einem kapazitiven Flächensensor (22) durch eine Relativbewegung (20) zwischen dem Eingabemittel (18) und dem kartenähnlichen Objekt (10).

**9.** Verwendung nach Anspruch 8
**dadurch gekennzeichnet, dass**
die Erzeugung des zeitabhängigen Signals (16) auf dem kapazitiven Flächensensor (22) die Bereitstellung eines ersten Kontakts (24) und eines zweiten Kontakts (26) umfasst, wobei der erste Kontakt (24) zwischen dem kartenähnlichen Objekt (10) und dem kapazitiven Flächensensor (22) besteht und der zweite Kontakt (26) zwischen dem kartenähnlichen Objekt (10) und dem Eingabemittel (18), wobei der erste Kontakt (24) und der zweite Kontakt (26) gleichzeitig bestehen und/oder
das Eingabemittel (18) eine feste Position relativ zum kapazitiven Flächensensor (22) beibehält und/oder das Eingabemittel (18) Teil des Flächensensors (22) ist.

**10.** System umfassend ein kartenähnliches Objekt (10) nach einem oder mehreren der Ansprüche 1bis 7 und einen kapazitiven Flächensensor (22)
**dadurch gekennzeichnet, dass**
das kartenähnliche Objekt (10) auf den kapazitiven Flächensensor (22) auflegbar ist, wobei das kartenähnliche Objekt (10) dazu eingerichtet ist, ein zeitabhängiges Signal (18) durch eine Relativbewegung (20) zwischen einem Eingabemittel (18) und dem kartenähnlichen Objekt (10) zu erzeugen, wobei das zeitabhängige Signal (18) durch eine Anordnung der Einzelelemente (14) auf dem kartenähnlichen Objekt (10) festlegbar ist.

**11.** System nach Anspruch 10
**dadurch gekennzeichnet, dass**
die Einzelelemente (14) der elektrisch leitfähigen Struktur (12) hinsichtlich Größe, Abstand und Form so ausgebildet sind, dass das aus der Relativbewegung (20) zwischen dem Eingabemittel (18) und dem kartenähnlichen Objekt (10) resultierende zeitabhängige Signal (16) auf dem kapazitiven Flächensensor (22) verändert ist gegenüber einem Referenzsignal, welches durch eine Referenz-Eingabe mit dem Eingabemittel (18) ohne Verwendung des kartenähnlichen Objekts (10) festgelegt wird.

**12.** Verfahren zur Erzeugung eines zeitabhängigen Signals (16) auf einem kapazitiven Flächensensor (22)
**dadurch gekennzeichnet, dass**
ein kartenähnliches Objekt (10) gemäß einem der Ansprüche 1-7, welches auf den kapazitiven Flächensensor (22) auflegbar ist, eine elektrisch leitfähige Struktur (12) aufweist, die eine Vielzahl von Einzelelementen (14) umfasst, die auf dem kartenähnlichen Objekt (10) angeordnet vorliegen, wobei das zeitabhängige Signal (16) durch die Anordnung der Einzelelemente (14) auf dem kartenähnlichen Objekt (10) festgelegt und durch eine Relativbewegung (20) zwischen einem Eingabemittel (18) und dem kartenähnlichen Objekt (10) erzeugt wird, wobei das Verfahren die Bereitstellung eines ersten Kontakts (24) und eines zweiten Kontakts (26) umfasst, wobei der erste Kontakt (24) zwischen dem kartenähnlichen Objekt (10) und dem kapazitiven Flächensensor (22) besteht und der zweite Kontakt (26) zwischen dem kartenähnlichen Objekt (10) und dem Eingabemittel (18), wobei mindestens der zweite Kontakt (26) dynamisch ausgebildet ist.

**13.** Verfahren nach Anspruch 12
**dadurch gekennzeichnet, dass**
das Verfahren zur Identifikation des kartenähnlichen Objekts (10) genutzt wird und folgende Schritte umfasst

a. Bereitstellung des kartenähnlichen Objekts (10) mit der elektrisch leitfähigen Struktur (12), die eine Vielzahl von Einzelelementen (14) umfasst,

b. Auflegen des kartenähnlichen Objekts (10) auf den kapazitiven Flächensensor (22), wodurch der erste Kontakt (24) ausgebildet wird,

c. Ausführen einer Relativbewegung (20) zwischen dem Eingabemittel (18) und dem kartenähnlichen Objekt (10), wodurch der zweite Kontakt (26) ausgebildet wird,

d. Erzeugung des zeitabhängigen Signals (16) auf dem kapazitiven Flächensensor (22) in Abhängigkeit von der Relativbewegung (20),

e. Auswertung des zeitabhängigen Signals (16) durch das den Flächensensor (22) beinhaltende Gerät zur Identifikation des kartenähnlichen Objekts (10),

wobei das zeitabhängige Signal (16), das auf dem kapazitiven Flächensensor (22) erzeugt wird, durch die Anordnung der Einzelelemente (14) auf dem kartenähnlichen Objekt (10) festgelegt wird.

**14.** Verfahren nach Anspruch 12 oder Anspruch 13
**dadurch gekennzeichnet, dass**
der erste Kontakt (24) und der zweite Kontakt (26) gleichzeitig bestehen und das kartenähnliche Objekt (10) zwischen Flächensensor (22) und Eingabemittel (18) angeordnet vorliegt.

**15.** Verfahren nach Anspruch 12, 13 oder 14
**dadurch gekennzeichnet, dass**
das resultierende zeitabhängige Signal (16) auf dem kapazitiven Flächensensor (22) eine Menge von Touch-Eingaben umfasst und das resultierende zeitabhängige Signal (16) bezüglich Position, Geschwindigkeit, Richtung und/oder Form der Touch-Eingaben und/oder Unterbrechung des Signals, Frequenz und/oder Signalstärke mindestens teilweise verändert ist gegenüber einem Referenzsignal, welches durch eine Referenz-Eingabe mit dem Eingabemittel (18) ohne Verwendung des kartenähnlichen Objekts (10) festgelegt wird.

**Claims**

**1.** A card-like object (10),
**characterized in that**
the card-like object (10) has an electrically conductive structure (12) comprising a plurality of individual elements (14) which are arranged on the card-like object (10), wherein the individual elements (14) of the electrically conductive structure (12), with respect to size, spacing and shape, are formed so that a time-dependent signal (16) on a capacitive surface sensor (22), resulting from a relative movement (20) between an input means (18) and the card-like object (10), is changed relative to a reference input with the input means (18), which occurs without using the card-like object (10).

**2.** The card-like object (10) according to claim 1,
**characterized in that**
the electrically conductive structure (12) comprises at least two galvanically separated individual elements (14), wherein the individual elements (14) are arranged in a plane.

**3.** The card-like object (10) according to claim 1 or claim 2,
**characterized in that**
the individual elements (14) of the electrically conductive structure (12) are formed substantially by rectangles which are arranged essentially parallel to one another.

**4.** The card-like object (10) according to one or more of claims 1 to 3,
**characterized in that**
the individual elements (14) of the electrically conductive structure (12) have a width of 0.1 mm to 20 mm and/or a spacing of 0.1 mm to 30 mm.

**5.** The card-like object (10) according to any one or more of claims 1 to 4,
**characterized in that**
the individual elements (14) of the electrically conductive structure (12) have a width of 0.1 mm to 6 mm.

**6.** The card-like object (10) according to any one or more of claims 1 to 5,
**characterized in that**

the electrically conductive structure (12) is produced in a multistage process comprising the following steps:

    a. applying an electrically conductive basic structure (28) to a substrate by means of a foil transfer method or electrically conductive paint,
    b. selectively removing parts of the electrically conductive base structure (28) by means of a laser, whereby an electrically conductive structure (12) with individual elements (14) having spatially separated areas is obtained.

7. The card-like object (10) according to any one or more of claims 1 to 6,
   **characterized in that**
   the electrically conductive structure (12) is produced in a multistage process comprising the following steps:

    a. applying an electrically conductive base structure (28) to a substrate by means of a foil transfer method or electrically conductive paint,
    b. selectively applying electrically conductive bridges and/or additional electrically conductive elements by means of inkjet printing by means of which electrically conductive paint is applied to the card-like object (10), whereby an electrically conductive structure (12) with individual elements (14) is obtained.

8. A use of the card-like object (10) according to any one or more of claims 1 to 7 for generating a time-dependent signal (16) on a capacitive surface sensor (22) by a relative movement (20) between the input means (18) and the card-like object (10).

9. The use according to claim 8,
   **characterized in that**
   the generation of the time-dependent signal (16) on the capacitive surface sensor (22) comprises providing a first contact (24) and a second contact (26), wherein the first contact (24) exists between the card-like object (10) and the capacitive surface sensor (22), and the second contact (26) exists between the card-like object (10) and the input means (18), wherein the first contact (24) and the second contact (26) exist simultaneously and/or
   the input means (18) maintains a fixed position relative to the capacitive surface sensor (22) and/or the input means (18) is part of the surface sensor (22).

10. A system comprising a card-like object (10) according to any one or more of claims 1 to 7 and a capacitive surface sensor (22),
    **characterized in that**
    the card-like object (10) can be placed on the capacitive surface sensor (22), wherein the card-like object (10) is adapted to generate a time-dependent signal (18) by a relative movement (20) between an input means (18) and the card-like object (10), wherein the time-dependent signal (18) can be established by an arrangement of the individual elements (14) on the card-like object (10).

11. The system according to claim 10,
    **characterized in that**
    the individual elements (14) of the electrically conductive structure (12), with respect to size, spacing and shape, are formed so that a time-dependent signal (16) on a capacitive surface sensor (22), resulting from the relative movement (20) between the input means (18) and the card-like object (10), is changed relative to a reference signal which is established by a reference input with the input means (18) without using the card-like object (10).

12. A method for generating a time-dependent signal (16) on a capacitive surface sensor (22),
    **characterized in that**
    a card-like object (10) according to any one of claims 1 to 7, which can be placed on the capacitive surface sensor (22), has an electrically conductive structure (12) which comprises a plurality of individual elements (14) which are arranged on the card-like object (10), wherein the time-dependent signal (16) is established by the arrangement of the individual elements (14) on the card-like object (10) and is generated by a relative movement (20) between an input means (18) and the card-like object (10), wherein the method comprises providing a first contact (24) and a second contact (26), wherein the first contact (24) exists between the card-like object (10) and the capacitive surface sensor (22), and the second contact (26) exists between the card-like object (10) and the input means (18), wherein at least the second contact (26) is formed dynamically.

13. The method according to claim 12,
    **characterized in that**

the method is used for identifying the card-like object (10) and comprises the following steps

  a. providing the card-like object (10) with the electrically conductive structure (12) which comprises a plurality of individual elements (14),
  b. placing the card-like object (10) on the capacitive surface sensor (22), whereby the first contact (24) is formed,
  c. performing a relative movement (20) between the input means (18) and the card-like object (10), whereby the second contact (26) is formed,
  d. generating the time-dependent signal (16) on the capacitive surface sensor (22) as a function of the relative movement (20),
  e. evaluating the time-dependent signal (16) by the device which includes the surface sensor (22) for identifying the card-like object (10),

wherein the time-dependent signal (16) which is generated on the capacitive surface sensor (22) is established by the arrangement of the individual elements (14) on the card-like object (10).

**14.** The method according to claim 12 or claim 13,
**characterized in that**
the first contact (24) and the second contact (26) exist simultaneously, and the card-like object (10) is arranged between surface sensor (22) and input means (18).

**15.** The method according to claim 12, 13 or 14,
**characterized in that**
the resulting time-dependent signal (16) on the capacitive surface sensor (22) comprises a large number of touch inputs, and the resulting time-dependent signal (16), with respect to position, speed, direction and/or shape of the touch inputs and/or interruption of the signal, frequency and/or signal strength, is changed at least partially relative to a reference signal which is established by a reference input with the input means (18) without using the card-like object (10).

**Revendications**

**1.** Objet de type carte (10)
**caractérisé en ce que**
l'objet de type carte (10) présente une structure électriquement conductrice (12) qui comprend une pluralité d'éléments individuels (14) qui se trouvent disposés sur l'objet de type carte (10), dans lequel les éléments individuels (14) de la structure électriquement conductrice (12) en ce qui concerne la taille, l'écartement et la forme sont réalisés de sorte qu'un signal dépendant du temps (16) résultant d'un mouvement relatif (20) entre un moyen de saisie (18) et l'objet de type carte (10) est modifié sur un capteur de surface capacitif (22) par rapport à une saisie de référence avec le moyen de saisie (18) qui se produit sans utilisation de l'objet de type carte (10).

**2.** Objet de type carte (10) selon la revendication 1,
**caractérisé en ce que**
la structure électriquement conductrice (12) comprend au moins deux éléments individuels (14) séparés l'un de l'autre de manière galvanique, dans lequel les éléments individuels (14) se trouvent disposés dans un plan.

**3.** Objet de type carte (10) selon la revendication 1 ou la revendication 2,
**caractérisé en ce que**
les éléments individuels (14) de la structure électriquement conductrice (12) sont pour l'essentiel formés par des rectangles qui se trouvent disposés pour l'essentiel parallèlement les uns aux autres.

**4.** Objet de type carte (10) selon l'une ou plusieurs des revendications 1 à 3,
**caractérisé en ce que**
les éléments individuels (14) de la structure électriquement conductrice (12) présentent une largeur de 0,1 mm à 20 mm et/ou un écartement de 0,1 mm à 30 mm.

**5.** Objet de type carte (10) selon l'une ou plusieurs des revendications 1 à 4,
**caractérisé en ce que**
les éléments individuels (14) de la structure électriquement conductrice (12) présentent une largeur de 0,1 mm à 6 mm.

6. Objet de type carte (10) selon l'une ou plusieurs des revendications 1 à 5,
**caractérisé en ce que**
la structure électriquement conductrice (12) est fabriquée lors d'un procédé à plusieurs stades comprenant les étapes suivantes :

a) application d'une structure de base électriquement conductrice (28) au moyen d'un procédé de transfert de feuilles ou d'une couleur électriquement conductrice sur un substrat,
b) élimination sélective de parties de la structure de base électriquement conductrice (28) au moyen d'un laser, moyennant quoi une structure électriquement conductrice (12) est reçue avec des éléments individuels (14) qui présentent des zones séparées les unes des autres dans l'espace.

7. Objet de type carte (10) selon l'une ou plusieurs des revendications 1 à 6,
**caractérisé en ce que**
la structure électriquement conductrice (12) est fabriquée lors d'un procédé à plusieurs stades comprenant les étapes suivantes :

a) application d'une structure électriquement conductrice (28) au moyen d'un procédé de transfert de feuilles ou d'une couleur électriquement conductrice sur un substrat,
b) application sélective de ponts électriquement conducteurs et/ou d'éléments électriquement conducteurs supplémentaires au moyen d'une pression de jet d'encre avec laquelle une couleur électriquement conductrice est appliquée sur l'objet de type carte (10),
moyennant quoi une structure électriquement conductrice (12) avec des éléments individuels (14) est obtenue.

8. Utilisation de l'objet de type carte (10) selon l'une ou plusieurs des revendications 1 à 7 pour la génération d'un signal dépendant du temps (16) sur un capteur de surface capacitif (22) par le biais d'un mouvement relatif (20) entre le moyen de saisie (18) et l'objet de type carte (10).

9. Utilisation selon la revendication 8,
**caractérisée en ce que**
la génération du signal dépendant du temps (16) sur le capteur de surface capacitif (22) comprend la mise à disposition d'un premier contact (24) et d'un second contact (26), dans laquelle le premier contact (24) est entre l'objet de type carte (10) et le capteur de surface capacitif (22) et le second contact (26) est entre l'objet de type carte (10) et le moyen de saisie (18), dans laquelle le premier contact (24) et le second contact (26) sont simultanés et/ou
le moyen de saisie (18) conserve une position fixe par rapport au capteur de surface capacitif (22) et/ou le moyen de saisie (18) est une partie du capteur de surface (22).

10. Système comprenant un objet de type carte (10) selon l'une ou plusieurs des revendications 1 à 7 et un capteur de surface capacitif (22),
**caractérisé en ce que**
l'objet de type carte (10) peut être déposé sur le capteur de surface capacitif (22), dans lequel l'objet de type carte (10) est conçu pour générer un signal dépendant du temps (18) par le biais d'un mouvement relatif (20) entre un moyen de saisie (18) et l'objet de type carte (10), dans lequel le signal dépendant du temps (18) peut être établi par le biais d'un agencement des éléments individuels (14) sur l'objet de type carte (10).

11. Système selon la revendication 10,
**caractérisé en ce que**
les éléments individuels (14) de la structure électriquement conductrice (12) en ce qui concerne la taille, l'écartement et la forme sont réalisés de sorte qu'un signal dépendant du temps (16) résultant du mouvement relatif (20) entre le moyen de saisie (18) et l'objet de type carte (10) est modifié sur le capteur de surface capacitif (22) par rapport à un signal de référence, lequel est établi par le biais d'une saisie de référence avec le moyen de saisie (18) sans utilisation de l'objet de type carte (10).

12. Procédé de génération d'un signal dépendant du temps (16) sur un capteur de surface capacitif (22),
**caractérisé en ce que**
un objet de type carte (10) selon l'une des revendications 1 à 7, lequel peut être déposé sur le capteur de surface capacitif (22), présente une structure électriquement conductrice (12) qui comprend une pluralité d'éléments individuels (14) qui se trouvent disposés sur l'objet de type carte (10), dans lequel le signal dépendant du temps (16) est établi par le biais de la disposition des éléments individuels (14) sur l'objet de type carte (10) et est généré par le biais d'un mouvement relatif (20) entre un moyen de saisie (18) et l'objet de type carte (10), dans lequel le procédé comprend la mise à disposition d'un premier contact (24) et d'un second contact (26), dans lequel le premier contact (24) est entre l'objet de type carte (10) et le capteur de surface capacitif (22) et le second contact (26) entre l'objet de type carte (10) et le moyen de saisie (18), dans lequel au moins le second contact (26) est réalisé de manière dynamique.

13. Procédé selon la revendication 12,
**caractérisé en ce que**
le procédé pour l'identification de l'objet de type carte (10) est utilisé et comprend les étapes suivantes

a. mise à disposition de l'objet de type carte (10) avec la structure électriquement conductrice (12) qui comprend une pluralité d'éléments individuels (14),
b. pose de l'objet de type carte (10) sur le capteur de surface capacitif (22), moyennant quoi le premier contact (24) est réalisé,
c. réalisation d'un mouvement relatif (20) entre le moyen de saisie (18) et l'objet de type carte (10), moyennant quoi le second contact (26) est réalisé,
d. génération du signal dépendant du temps (16) sur le capteur de surface capacitif (22) en fonction du mouvement relatif (20),
e. évaluation du signal dépendant du temps (16) par le biais de l'appareil contenant le capteur de surface (22) pour l'identification de l'objet de type carte (10), dans lequel le signal dépendant du temps (16) qui est généré sur le capteur de surface capacitif (22) est établi par le biais de la disposition des éléments individuels (14) sur l'objet de type carte (10).

14. Procédé selon la revendication 12 ou la revendication 13,
**caractérisé en ce que**
le premier contact (24) et le second contact (26) sont simultanés et l'objet de type carte (10) se trouve disposé entre le capteur de surface (22) et le moyen de saisie (18).

15. Procédé selon la revendication 12, 13 ou 14
**caractérisé en ce que**
le signal dépendant du temps (16) résultant comprend sur le capteur de mouvement capacitif (22) une quantité de saisies tactiles et le signal dépendant du temps (16) résultant est modifié au moins partiellement en ce qui concerne la position, la vitesse, la direction et/ou la forme des saisies tactiles et/ou une interruption du signal, de la fréquence et/ou de l'intensité du signal par rapport à un signal de référence, lequel est établi par le biais d'une saisie de référence avec le moyen de saisie (18) sans utilisation de l'objet de type carte (10).

Fig. 1

Fig. 2

Fig. 3

Fig. 4

Fig. 5

10

12

14

20

20

Fig. 6

Fig. 7

Fig. 8

Fig. 9

Fig. 10

Fig. 11

Fig. 12

Fig. 13

EP 3 577 601 B1

Fig. 14

44

Fig. 15

Fig. 16

N ... Anzahl
der Elemente

L

D

W

4

V

X ... Anzahl der Stufen

Fig. 17

Fig. 18

Fig. 49

Fig. 20

12

10

Fig. 21

Fig. 22

Fig. 23

Fig. 24

Fig. 25

0123 4567 8901 2345

CARDHOLDER NAME

10

14

12

Fig. 26

Fig. 27

18

10

22

10

14

12

18

22

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154524 A1
- DE 102012023082 A1
- DE 102013101881 A1
- US 20100045627 A1